# EUROPEAN PATENT APPLICATION

(11) **EP 1 325 925 A1**
(43) Date of publication of application: **09.07.2003**
(21) Application number: 02380250.7
(22) Date of filing: 04.12.2002
(51) Int. Cl.: C07F 11/00, C08F 10/06, C08F 4/69

(54) **Chromium catalysts active in olefin polymerization**

(30) Priority: 03.01.2002 EP 02380001
(71) Applicant: REPSOL QUIMICA S.A., E-28046 Madrid (ES)
(72) Inventor: Mendez Llatas, Luis, 28935 Mostoles (Madrid) (ES); Sanz Gil, Encarna, 28430 Alpedrete (Madrid) (ES); Sancho Royo, José, 28003 Madrid (ES); Esteruelas Rodrigo, Miguel Angel, 50009 Zaragoza (ES); Lopez de Lama, Ana Margarita, 50009 Zaragoza (ES); Olivan Esco, Montserrat, 22004 Huesca (ES); Onate Rodriquez, Enrique, 26005 Logrono (ES)
(74) Representative: Del Santo Abril, Natividad

(57) **Abstract**

The present invention relates to chromium(III) complexes defined by following formula: 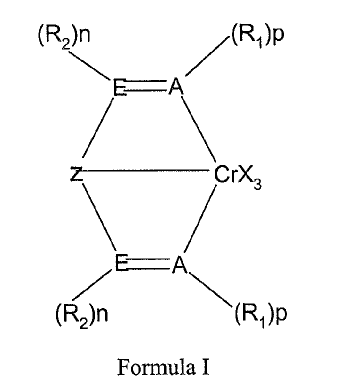 wherein:
each R₁ is independently selected from hydrogen, C₁-C₂₀ alkyl, C₃-C₂₀ cycloalkyl, C₆-C₂₀ aryl, C₂-C₂₀ alkenyl, optionally comprising 1 to 5 heteroatoms such as Si, N, P, O, F, Cl, B; each R₂ is independently selected from hydrogen, C₁-C₂₀ alkyl, C₃-C₂₀ cycloalkyl, silyl, C₆-C₂₀ aryl, C₂-C₂₀ alkenyl, optionally comprising 1 to 5 heteroatoms such as Si, N, P, O, F, Cl, B; R₁ and R₂ can join together forming one or more aromatic or aliphatic rings optionally containing heteroatoms; each A is independently selected from nitrogen, phosphorous, As, Sb; each E is independently selected from carbon, phosphorus, nitrogen; Z is a group comprising at least a nitrogen, phosphorous, oxygen or sulfur atom which is able to coordinate to the chromium atom; Z can join one or more R₂ groups to form one or more rings; each p is independently 1 or 2;
each n is independently 0, 1 or 2; each X is independently an atom or group covalently or ionically attached to the chromium atom.

This invention further relates to olefin polymerization catalysts obtainable by treating a chromium complex with an organoaluminium compound.

The catalyst preparation and its use in polymerization are described.

## Description

The present invention relates to olefin polymerization catalysts comprising chromium tridentate complexes, to chromium (III) tridentate complexes, and to a process for the (co)polymerization of alpha-olefins.

The industrial production of polyolefins mediated by transition metal catalysts has been expanding since the discoveries of the so-called Ziegler-Natta and Phillips catalysts. These types of catalytic systems are of heterogeneous nature, meaning this that, within a catalytic system, the polymerization activity is located in sites (known in the art as active centers) that are of non-identical nature. The active centers for the Ziegler-Natta catalysts are usually based on titanium atoms while the Phillips catalysts employ chromium. The heterogeneous nature of the catalysts is thought in the art to be responsible for certain heterogeneities in the polymers produced (e.g. wide molecular weight and co-monomer distributions) which might be not desirable for certain applications. The discovery by Kaminsky and Sinn that metallocene complexes of titanium and zirconium polymerize olefins when activated with certain agents (usually known as co-catalysts) rendered polymerization catalytic systems of homogeneous nature. Because the active centers of the Kaminsky-Sinn catalysts are elements of the Group 4 of the Periodic Table of the Elements (titanium, zirconium, hafnium), they are often conceptually considered in the art as homogeneous versions of the Ziegler-Natta catalytic systems. The homogeneous nature of these systems has allowed the production of polymers with narrower molecular weight and co-monomer distributions, and also a better understanding of the factors which control the stereo regularity (tacticity), which allow a better control of the properties of the final polymer. Because the properties of the polymers so produced can be better controlled, they are known in the art as tailor-made polyolefins and since all active centers in the catalysts are identical, these catalysts are usually known as Single Site Catalysts.

Since the discovery of Kaminsky and Sinn many other homogeneous catalytic systems have appeared based on Ziegler-Natta type elements (titanium, zirconium) but also with late transition metals (iron, cobalt, nickel, palladium). Most of these systems consist of transition metal complexes, i.e.: a transition metal bound to one or more organic molecules (usually known in the art as ligands). In most cases, the transition metal complex must be activated with a co-catalyst in order to be catalytically active.

In the last 3 years, several patent applications have been filed wherein olefins are polymerized by using late transition metals complexed with tridentate ligands.

WO 98/27124 (Du Pont) and WO 99/12981 (BP) disclose tridentate imino ligands complexing iron or cobalt through formation of three coordination bonds.

WO 98/30612 discloses the use of similar complexes in the polymerization of propylene.

In spite of the success of heterogeneous Phillips catalysts, single site catalysts based on Group 6 or, more specifically, chromium are less common.

Patent Applications WO 00/20427 (example 11) and WO 00/69923 (examples 1, 5, 6, 10 and 13) provide examples of chromium complexes in which the metal is in divalent oxidation state, Cr[II], and is coordinatively bound to one characteristic tridentate neutral ligand by donation of lone pair of electrons from three nitrogen atoms in the ligands to the metal, and to two halogen or alkyl atoms through ionic or covalent bonding. Some of these complexes have been shown to be active in the polymerization of ethylene (WO 00/20427 example 16.7, reporting an activity of 8 kg PE/mol Cr· bar· h) and propylene (WO 00/69923, polymerization run n° 1 with an activity of 1.4E+04 kg PP/mol Cr· mol propylene· h) when activated with methylaluminoxane (co-catalyst) under certain polymerization conditions. However, the referred state of the art does not provide evidence of tridentate chromium homogeneous catalytic systems sufficiently active in the polymerization of ethylene for industrially practical purposes. Catalytic systems providing activities of 100 kg PE/mol Cr· bar· h or greater at polymerization temperatures of 50 °C or over under ethylene polymerization pressures of 1 bar or more are desired for industrially practical purposes.

We have found that the pretreatment of tridentate chromium complexes, preferably a tridentate chromium complex being the metal in a trivalent oxidation state, Cr[III], with one or more organoaluminium compound(s), e.g. aluminoxane and/or trialkylaluminium compounds, can result in exceptionally high-active catalysts for the polymerization of ethylene. More specifically, we have found that complexes of chromium [III] with tridentate ligands having at least one imino group pretreated with alkylaluminiums and/or alkylaluminoxanes can reach activities over 100 kg PE/(mol Cr· bar· h) at polymerization temperatures of 50°C or over and at 1 bar of ethylene pressure or over. The present invention is also directed to chromium [III] tridentate complexes of formula (I) 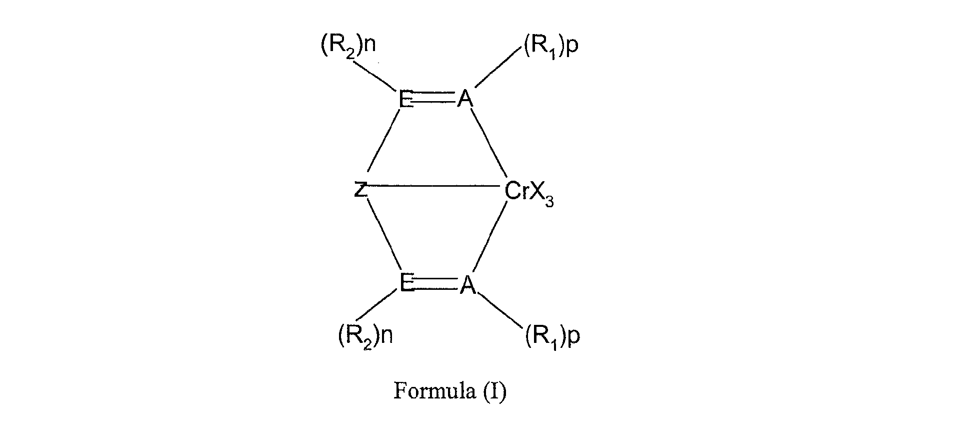 wherein:
Z is a group comprising at least a nitrogen, phosphorous, oxygen or sulfur atom which is able to coordinate to the chromium atom;
each R₁ is independently selected from the group consisting of H and a monovalent radical comprising from 1 to 30 carbon atoms and from 0 to 5 heteroatoms independently selected from the group consisting of Si, N, P, O, F, C1, and B atoms; preferably each R₁ is selected from hydrogen, linear or branched C₁-C₂₀ alkyl, C₃-C₂₀ cycloalkyl, C₆-C₃₀ aryl, linear or branched C₂-C₂₀ alkenyl, optionally comprising from 1 to 5 heteroatoms independently selected from the group consisting of Si, N, P, O, F, C1, and B; more preferably each R₁ is independently an optionally substituted phenyl, 2-naphthyl, diphenylmethyl, N-pirrolyl, 5-anthracyl; still more preferably each R₁ is independently a phenyl radical optionally substituted in positions 2 and/or 6;
each R₂ is independently selected from the group consisting of H and a monovalent radical comprising from 1 to 30 carbon atoms and from 0 to 5 heteroatoms independently selected from the group consisting of Si, N, P, O, F, C1, and B atoms; preferably each R₂ is selected from hydrogen, linear or branched C₁-C₂₀ alkyl, C₃-C₂₀ cycloalkyl, silyl, C₆-C₃₀ aryl, linear or branched C₂-C₂₀ alkenyl, optionally comprising 1 to 5 heteroatoms independently selected from the group consisting of Si, N, P, O, F, C1, and B; more preferably each R₂ is independently selected from the group consisting of H, methyl, and phenyl;
each R₂ can join together with either R₁ or Z forming one or more aromatic or aliphatic rings optionally containing heteroatoms; preferably each aromatic or aliphatic ring optionally contain from 0 to 3 Si atoms;
each A is independently selected from nitrogen, phosphorous, As, and Sb;
each E is independently selected from carbon, phosphorus, and nitrogen;
each p is independently 1 or 2;
each n is independently 0, 1 or 2; and each X is independently an atom or group covalently or ionically attached to the chromium atom.

In a preferred embodiment
Z is selected from the group consisting of: 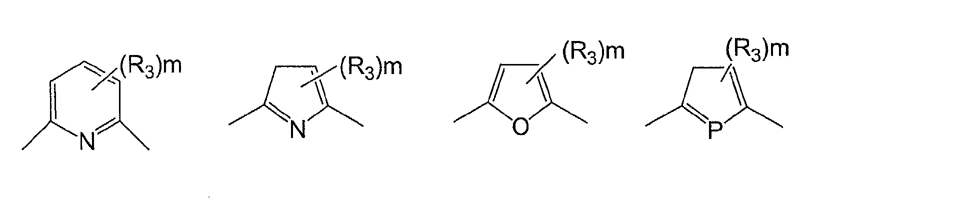 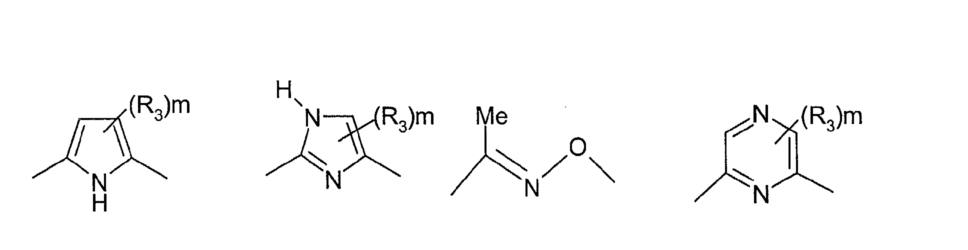 wherein each R₃ is independently selected from linear or branched C₁-C₂₀ alkyl, C₆-C₃₀ aryl, hydroxyl, amino, nitro, tri(linear or branched C₁-C₂₀ alkyl)silyl, C₁-C₂₀ alkoxy, chlorine, bromine, fluorine and trifluoromethyl;
m is 0, 1, 2 or 3;
A is nitrogen; and
E is carbon.

These complexes are used as olefin polymerization catalyst component resulting in highly to very highly active catalytic systems when properly activated with co-catalysts (e.g. aluminoxanes) in the homopolymerization and co-polymerization of alpha-olefins. In another aspect, the invention relates to an olefin polymerization catalyst obtainable by contacting a tridentate chromium complex with one or more organoaluminium compound(s). Pretreatment of tridentate chromium complexes, preferably a tridentate chromium complex wherein Cr is in a trivalent oxidation state, Cr[III], with one or more organolauminium compound(s), such as aluminoxane and/or trialkylaluminium compounds, results in exceptionally high-active catalysts for the polymerization of olefins. In a particular embodiment, said tridentate chromium complex is a compound of formula (I).

A process for the activation of the chromium complexes by pre-treatment of the complexes with one or more alkylaluminium and/or alkylaluminoxane compounds is described whereupon particularly high activities can be achieved.

The pretreatment of the Cr complex with one or more organoaluminum compounds can take place in different ways. Preferably, the pretreatment is performed for at least 20 minutes, more preferably for at least 30 minutes. The temperature of pretreatment can vary in a broad range, but is preferably comprised between 0 and 100 °C, more preferably between 20 and 80 °C. The chromium complex and the organoaluminium compound or compounds are contacted previous to the contact with the monomer in a polymerization process.

In a preferred embodiment, the tridentate Cr complex is in the oxidation state +3. An advantage resulting from the use of trivalent chromium complexes instead of Cr[II] is that, as it is well known in the art, Cr[II] complexes are sensitive towards oxidation in atmospheres which contain oxygen such as air. For instance in 'Comprehensive Coordination Chemistry. The Synthesis, Reactions, Properties and Applications of Coordination Compounds. G. Wilkinson, R. D. Gillard and J.A. McCleverty, Eds. Vol 3: Main Group and Early Transition Elements, 1987.'it is stated that 'Chromium[II] complexes, especially in solution, are very rapidly oxidized by air'.Examples of preferred organoaluminium compounds are trialkylaluminium compounds such as trimethylaluminium, triethylaluminium, tri-n-butylaluminium, triisobutylaluminium and also aluminoxanes such as methylaluminoxane, ethylaluminoxane, tetraisobutylaluminoxane, iso-butylaluminoxane, etc. The actual structure of methylaluminoxane, which is usually obtained from reaction of trimethylaluminium and controlled amounts of water, is not yet fully known. It has been proposed to be actually a mixture of linear, cyclic and cage type structures.

It is possible, in a process for the (co)polymerization of olefins, such as alpha olefins, to further add other cocatalysts (activators) such as organoaluminium compounds and/or hydrocarbylboron compounds to the polymerization reactor. The organoaluminium activators preferred are those organoaluminium compounds previously mentioned in connection with the activation of the chromium complex. The hydrocarbylboron activators preferred are usually chosen in view of the non-coordinating abilities of the anions formed after reaction with the chromium complex. Examples of such activators are tris(pentafluorophenyl)boron, trityltetra(pentafluorophenyl)borate, dimethylphenylammoniumtetra(pentafluorophenyl)borate, and others known to those skilled in the art. As it was mentioned before, the activators can be employed as such or forming a mixture with other activators with similar or different nature. Thus, combinations of alkylaluminiums with alkylaluminoxanes, or combinations of alkylaluminiums with hydrocarbylboron compounds, or combinations of alkylaluminoxanes and hydrocarbyl boron compounds or any other combination can be employed.

The Cr complexes of the present invention can be used as homogeneous catalysts or supported on an inorganic or organic carrier. As a carrier, any carrier known in the art can be used, preferably silica, alumina, silica-alumina and organic polymers such as polyethylene, polypropylene and crosslinked polystyrene.

In a preferred but not limiting example, the supported catalyst is obtained by mixing the Cr complex, the support and an aluminoxane in any order.

The catalyst obtainable by contacting a chromium complex with one or more organoaluminium compounds, may be used as an homogeneous catalyst or supported on an inorganic or organic carrier as those previously defined. In a particular embodiment, said chromium complex is a compound of formula (I)

The supported catalyst can be used as such or can be prepolymerized by mixing the supported catalyst, a cocatalyst, preferably aluminoxane, and ethylene in the presence of a diluent such as toluene.

The molecular weight of the polyethylene obtained by the Cr complexes of the present invention can vary from low molecular weight polyethylene (Mw of about 1000) to high molecular weight polyethylene (higher than 100,000) depending on the structure of the ligands used and from the other parameters of the catalyst system (amount and type of cocatalyst, presence and type of support, etc.).

In a further embodiment of the present invention, the catalysts provided by the instant invention can be specially employed for the production of polyolefin waxes, in particular of polyethylene wax, which can be employed in a number of specific applications in their own or as a component such as, for instance, component of inks. The polymerization catalysts here described can be employed in their own or they can be employed together with other polymerization catalysts in order to obtain polyolefins, such as polyethylenes, with special properties. Other polymerization catalysts can be of heterogeneous or homogeneous nature. For example the chromium catalysts of the present invention can be employed together with heterogeneous catalysts such as those known in the art as Ziegler-Natta catalysts or Phillips catalysts, or with homogeneous catalysts such as metallocenes as those described, for example, in patents EP 129,368, US 5,324,800, EP 416,815, nickel or palladium diimino catalysts as those described, for example, in WO 96/23010, iron or cobalt pyridine bisimino as those described, for example, in WO 98/27124, WO 98/30612, WO 99/12981, WO 00/15646, WO 00/47592 or WO 01/14391, or salicylaldiminato zirconium or titanium catalyst as described in, for example, EP 1,013,674. The homogeneous catalysts employed can also be supported on inorganic or organic solids.

In a particular embodiment, the chromium catalysts here described can be employed forming part of a tandem catalytic system for the production of branched polyolefins, in particular of branched polyethylene or LLDPE (linear low density polyethylene). The branched polyolefin is obtained by the combination of at least two catalysts. A first chromium catalyst, preferably chromium[III] as described in the present invention, gives rise to low molecular weight alkenes or alpha-olefins under the set polymerization conditions, these low molecular weight alkenes or alpha-olefins are incorporated by a second catalyst component into growing polyethylene chains. The second catalyst component can be of any nature, Ziegler-Natta, Phillips, metallocene, or other single or multiple-site catalytic system, having the ability of co-polymerizing the alpha-olefins with other olefins, in particular with ethylene. The combination of the two or more catalysts forming a tandem polymerization catalyst system can be simultaneous or sequential in time. The process can be performed in a single reactor or in two or more sequential reactors. The utilization of a tandem catalytic system as here described is advantageous for the production of branched polyethylene from ethylene as the single monomer, without the need of a second monomer (comonomer). This can result in high reduction of the costs for obtaining branched polyethylene, in particular of LLDPE (linear low density polyethylene).

In another aspect, the invention relates to a process for the (co)polymerization of alpha olefins which comprises the use of a catalyst provided by the instant invention. The catalysts according to the invention are suitable for use in any polymerization process including a solution, gas, high pressure or slurry process. The catalyst may be used as an homogeneous catalyst or supported on an inorganic or organic support as mentioned above.

In an embodiment, said catalyst is a catalyst obtainable by contacting a chromium complex with one or more organoaluminium compounds. In a particular embodiment, said chromium complex is a compound of formula (I). In this case, the chromium complex and the organoaluminium compound or compounds are contacted previous to the contact with the monomer in the polymerization process. Said chromium complex, in a particular embodiment, may be a compound of formula (I).

In another embodiment, the catalyst comprises a chromium complex of formula (I).

It is possible to directly add to the polymerization reactor one or more co-catalysts (activators), such as organoaluminium compounds (e.g., aluminoxane and/or trialkylaluminium compounds) and/or hydrocarbylboron compounds.

In a particular embodiment the invention refers to a process for the (co)polymerization of ethylene optionally in combination with a C₃-C₈ alpha-olefin.Preferred but not limiting examples of ligands of formula II which can be used in the complexes with Cr[III] are herebelow listed

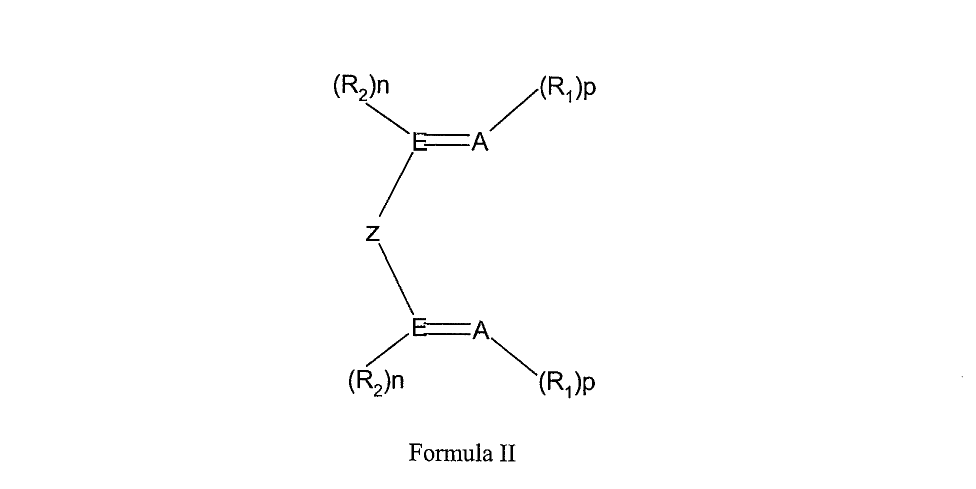

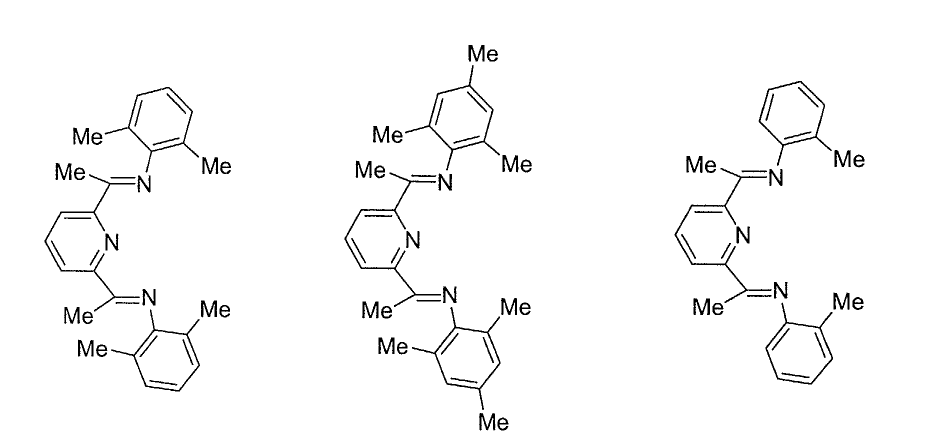

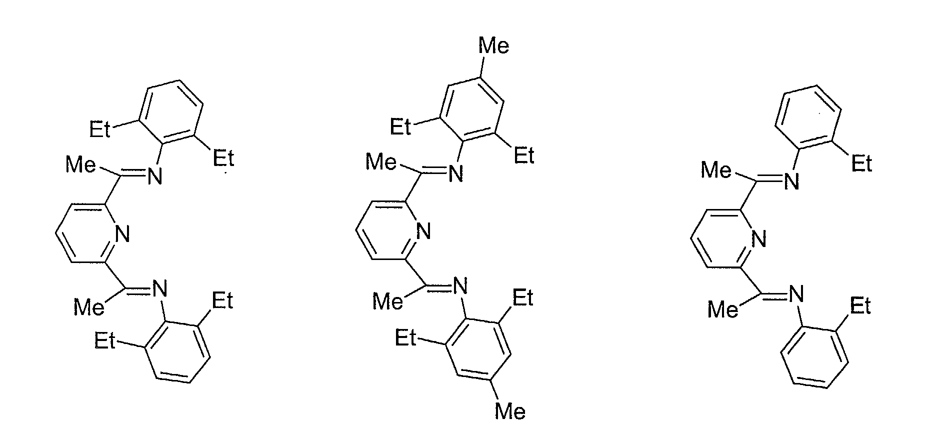

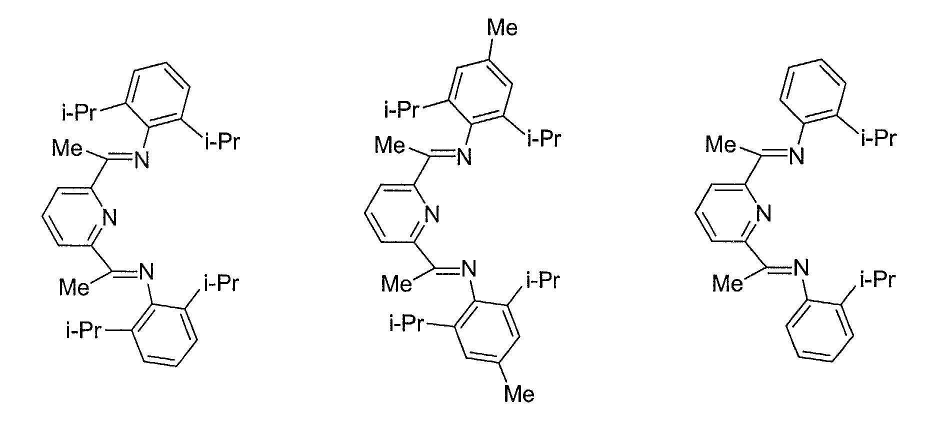

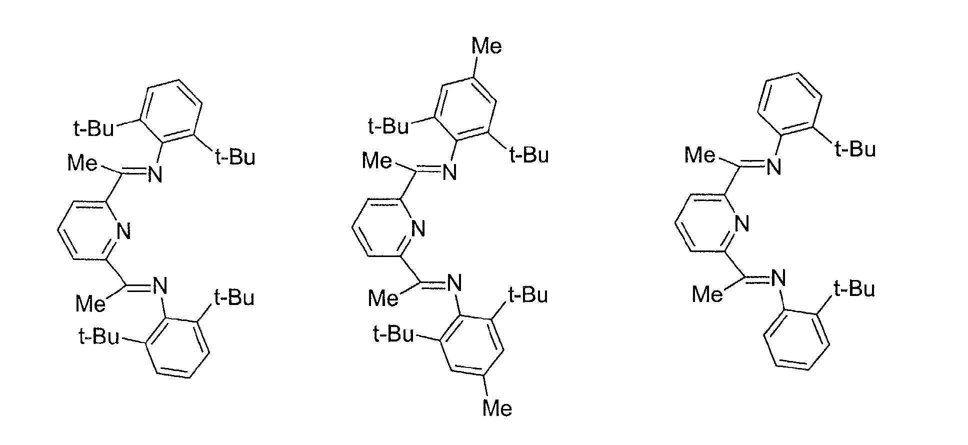

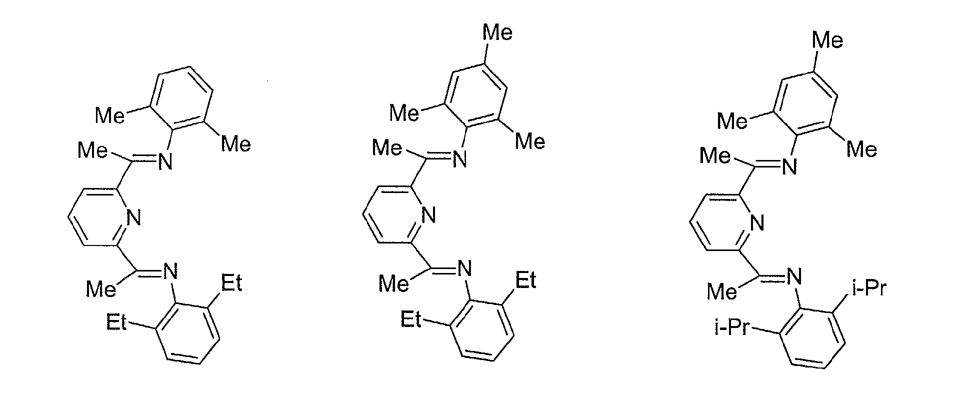

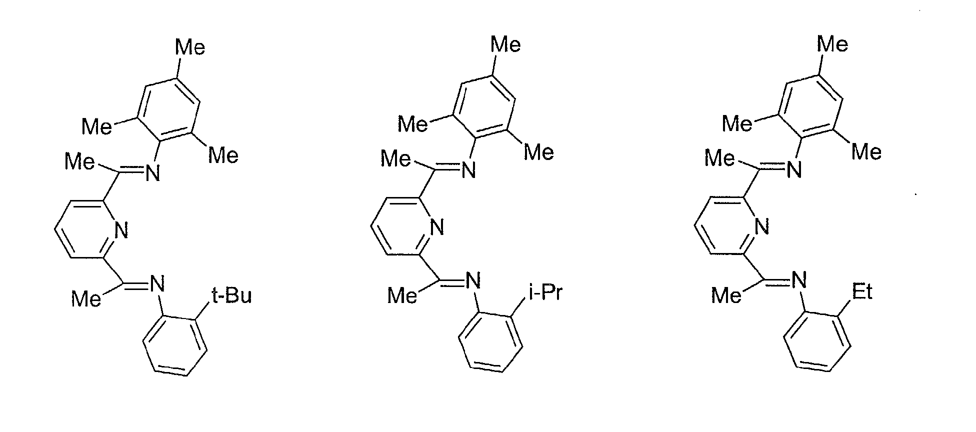

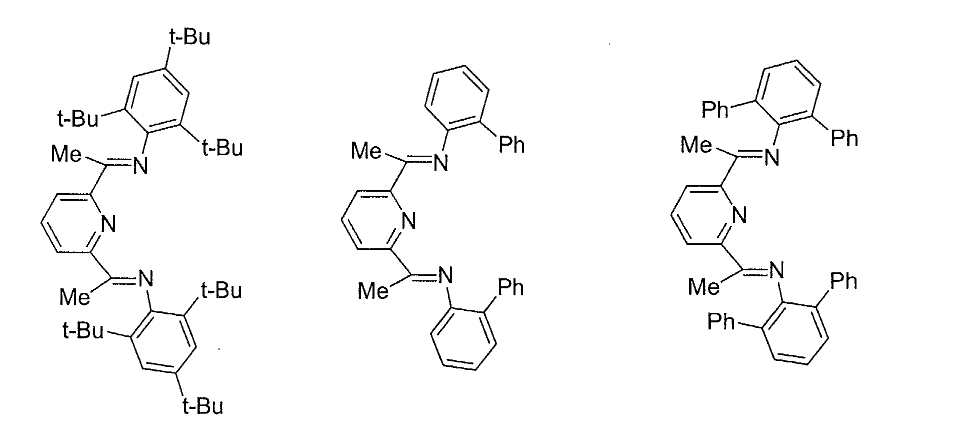

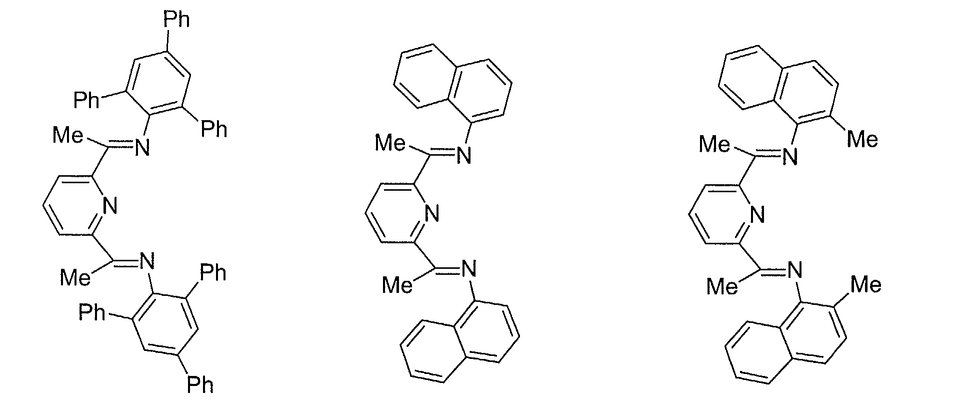

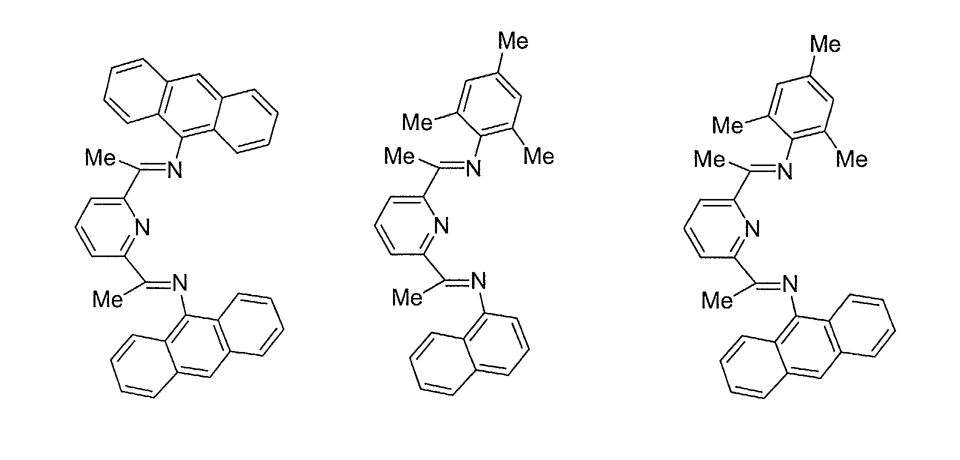

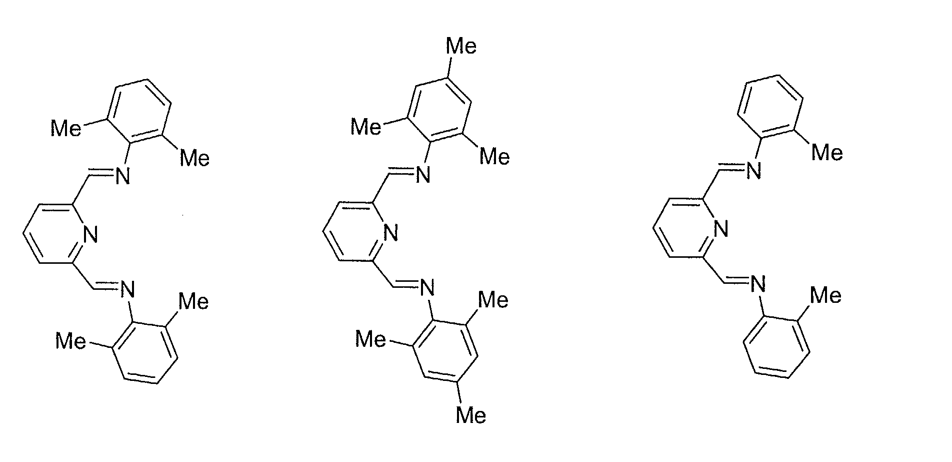

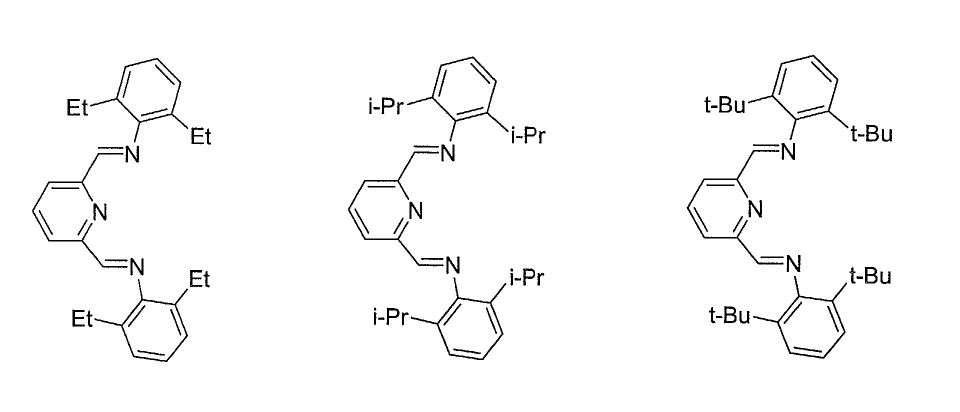

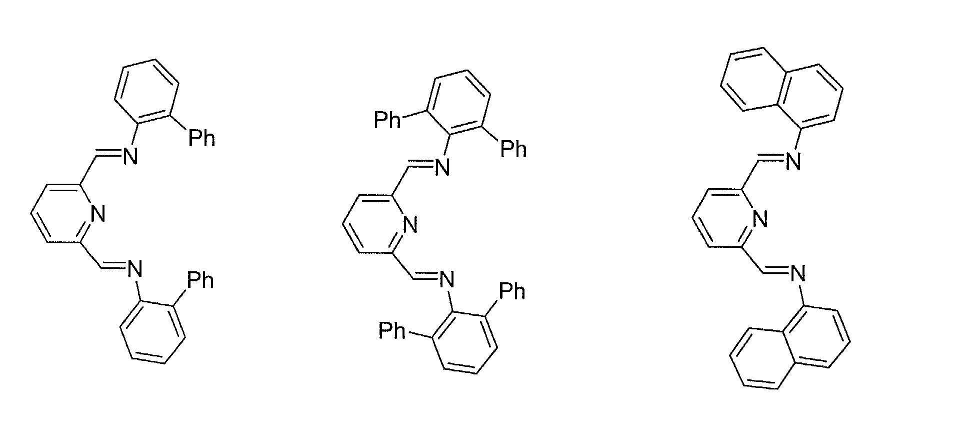

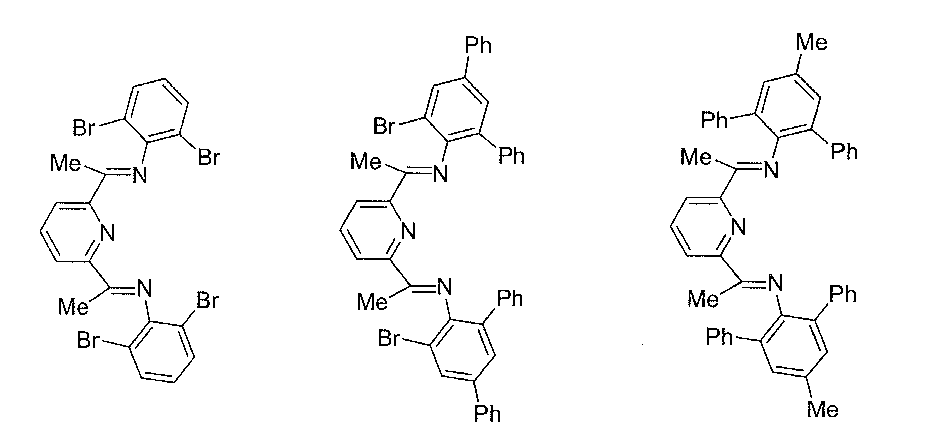

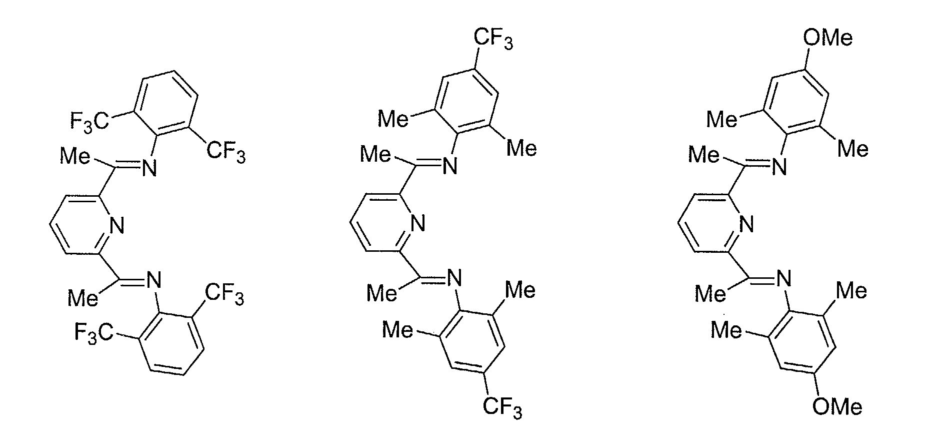

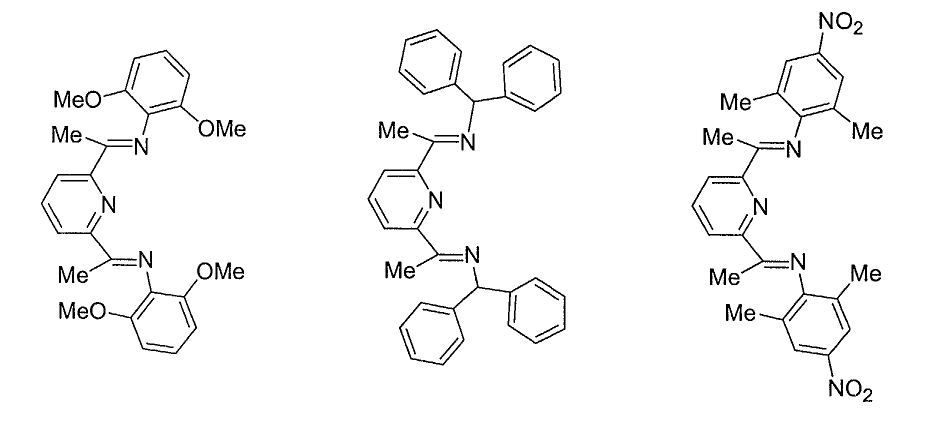

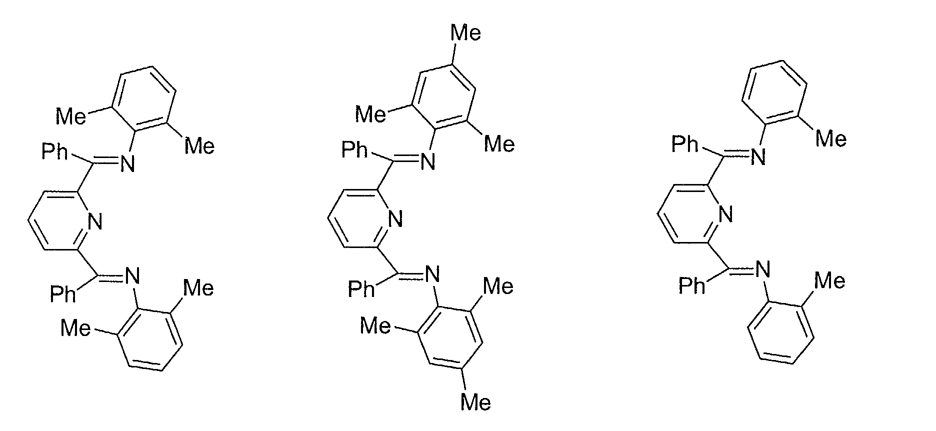

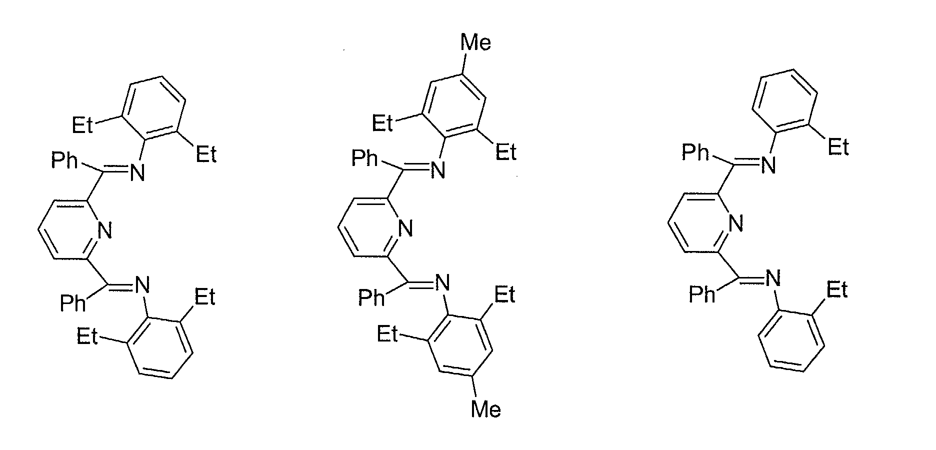

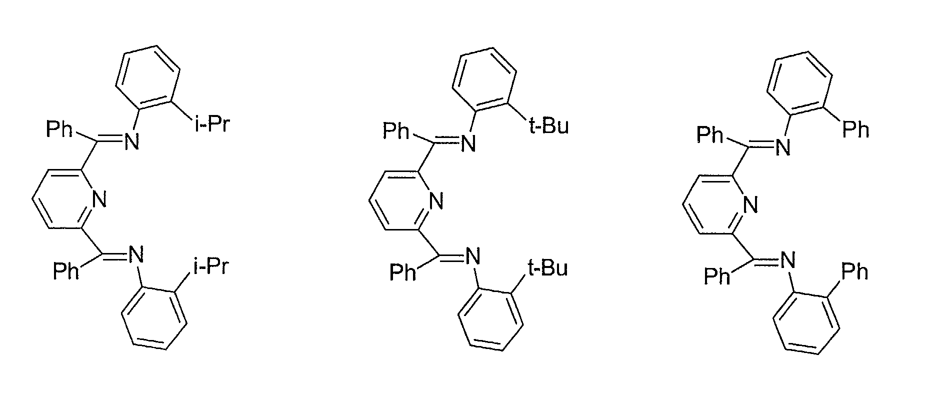

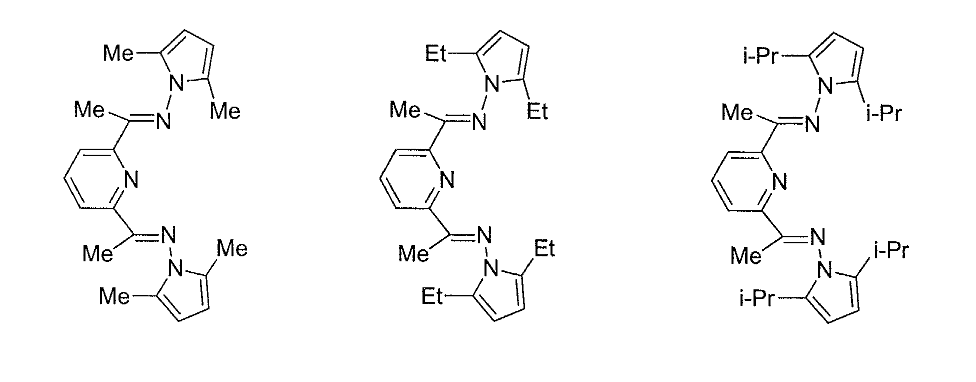

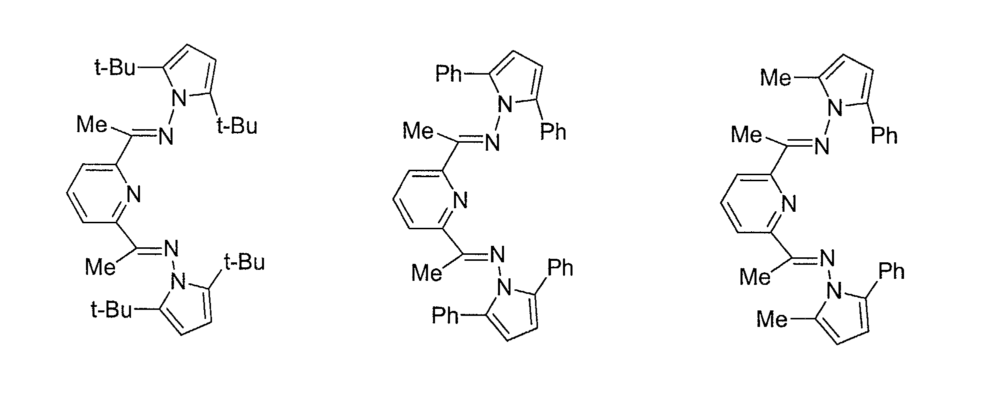

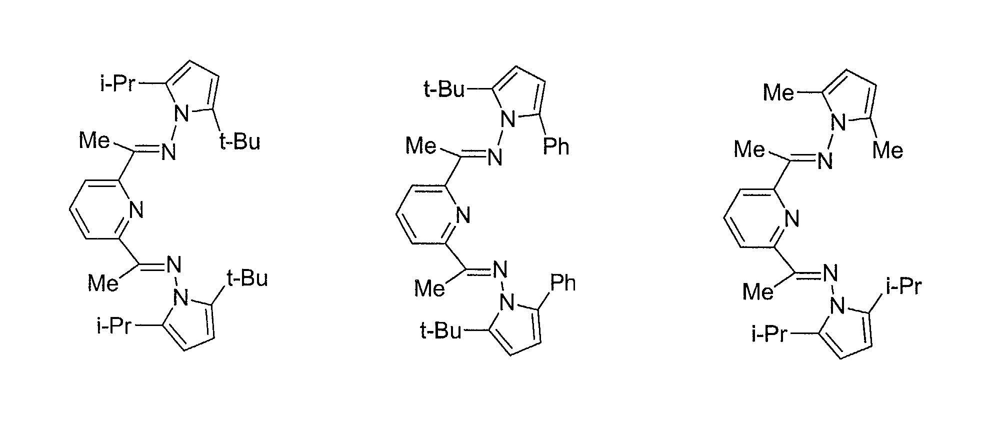

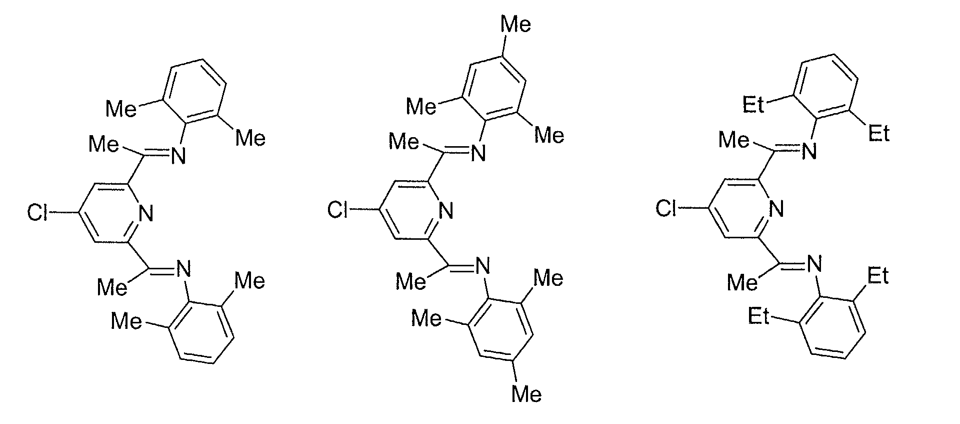

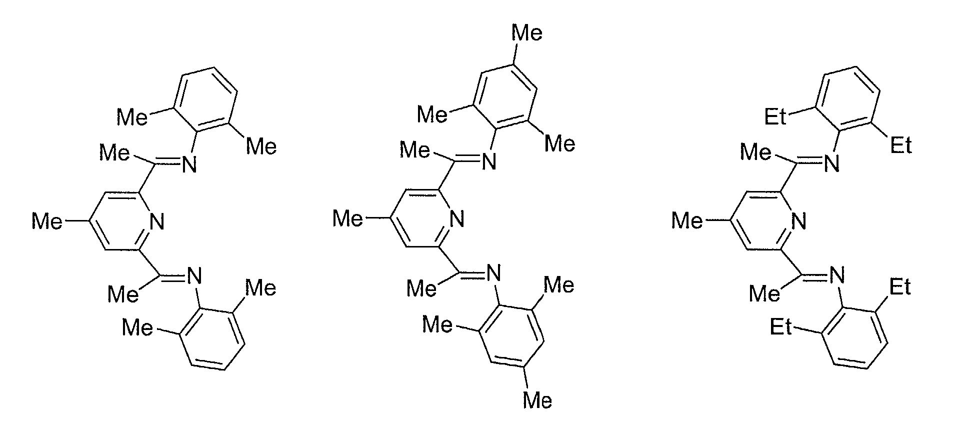

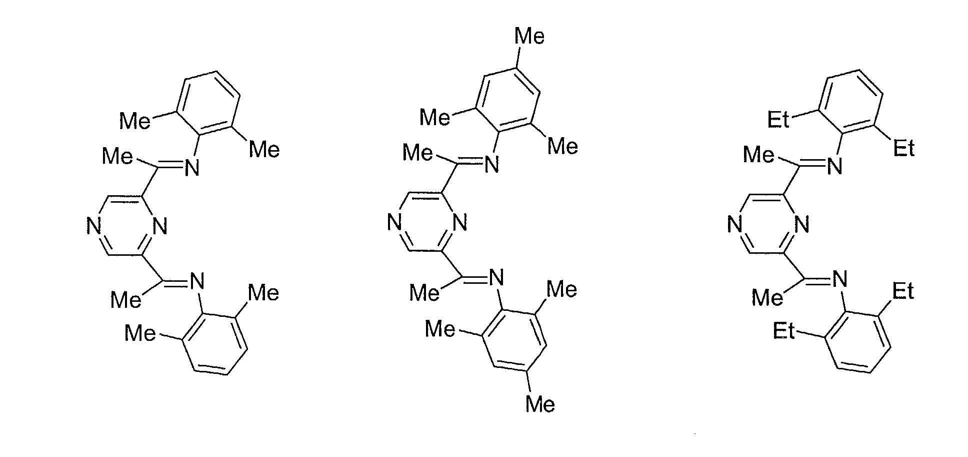

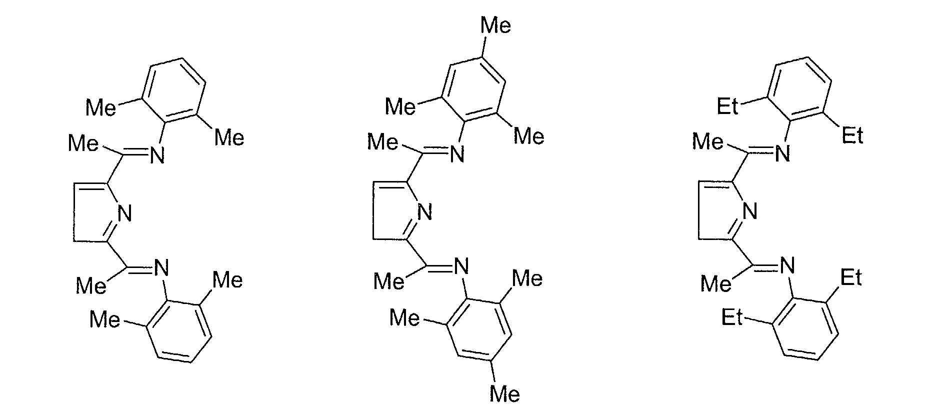

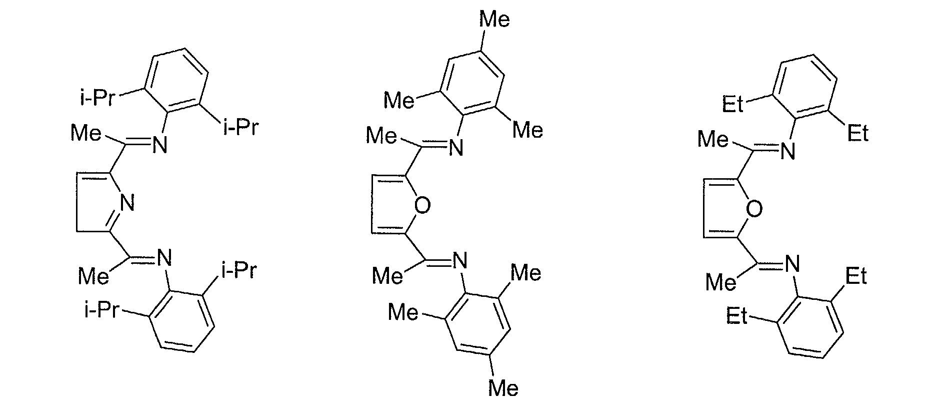

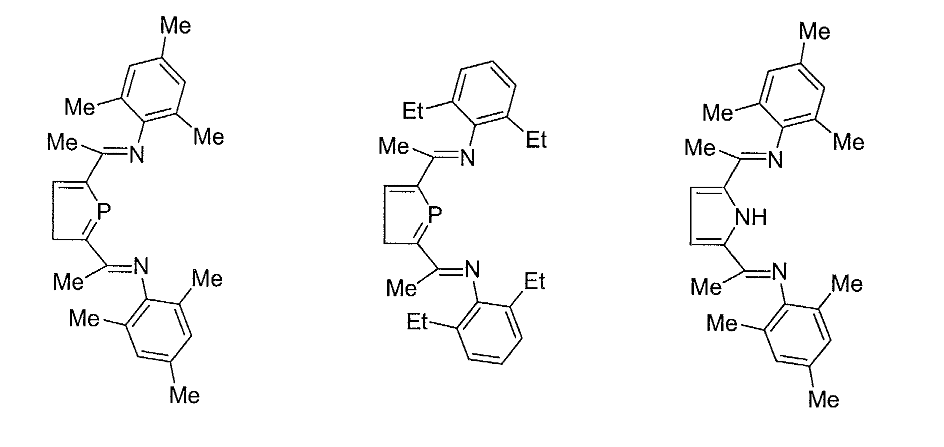

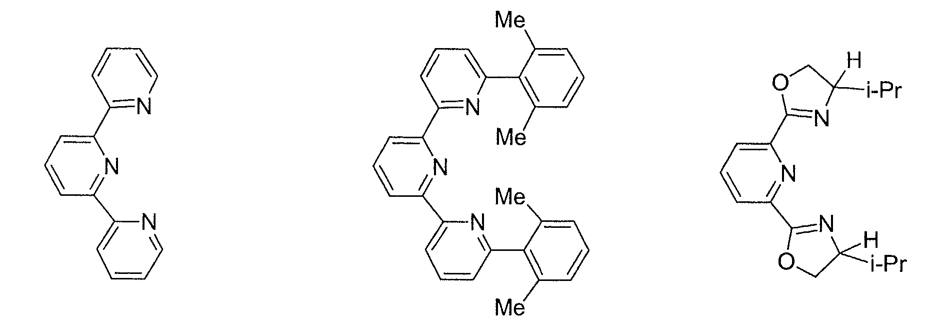

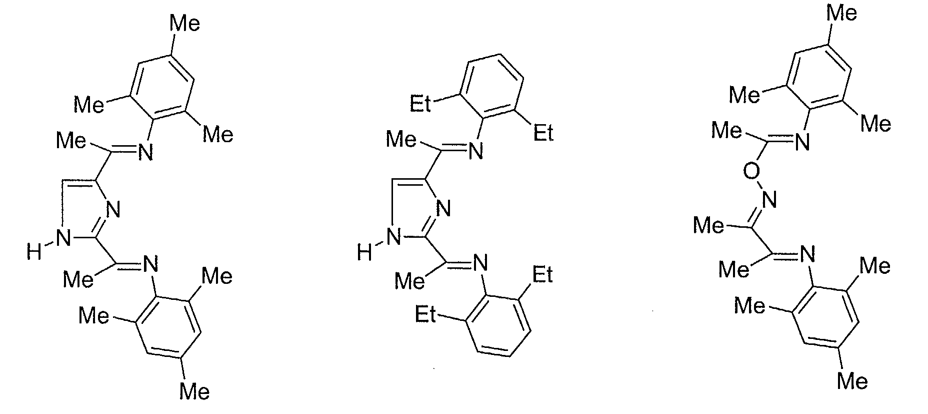

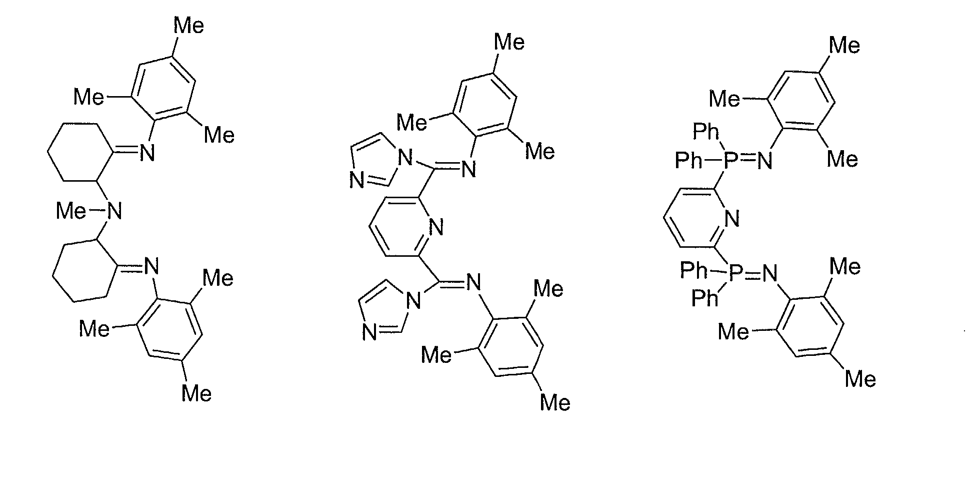

### Examples of preparation of Chromium complexes

**General Procedures.** All manipulations were carried out under an atmosphere of argon, using standard Schlenk techniques. Solvents were refluxed over an appropriate drying agent and distilled prior to use. C, H, and N analyses were measured on a C. E. Instruments EA1108 analyzer. Infrared spectra were recorded on a Perkin-Elmer 883 spectrometer as solids (Nujol mull). ¹H, ¹³{¹H}C and ¹⁹F spectra were recorded on a Varian Gemini 2000. Chemical shifts are referenced to residual solvent peaks (¹H, ¹³C{¹H}) or external CFCl₃. Mass spectra analyses were performed with a VG Auto Spec instrument. The ions were produced, FAB⁺ mode, with the standard Cs⁺ gun at ca. 30 kV, and 3-nitrobenzyl alcohol (NBA) was used as the matrix. Electron impact MS (operating at 70 eV) was used for the ligands. Cyclic voltammetric experiments were performed by employing an EG&G PARC Model 273 potentiostat. A three-electrode system was used, consisting of a platinum-wire working electrode, a platinum-wire auxiliary electrode, and a saturated calomel reference electrode. The measurements were carried out in CH₂Cl₂ solutions with 0.1 M Bu₄NPF₆ as supporting electrolite at room temperature at a sweep rate of 0.1 V·s⁻¹. All voltametric measurements were made under a dry argon atmosphere. 2,6-bis[(4*S*)-isopropyl-2-oxazolin-2-yl]pyridine was purchased from Aldrich and used as received. 2,6-bis {1-[2,6-(diethylphenyl)imino]ethyl}pyridine, 2,6-bis{1-[(2-methyl-6-isopropylphenyl)imino] ethyl}pyridine, 2,6-bis{1-[(2-trifluoromethylphenyl) imino]ethyl}pyridine and 2,6-bis{1-(cyclohexylimino)ethyl}pyridine were prepared as described bellow. All the other ligands were prepared according to published methods (G. J. P. Britovsek, M. Bruce, V. C. Gibson, B. S. Kimberley, P. J. Maddox, S. Mastroianni, S. J. McTavish, C. Redshaw, G. A. Solan, S. Strömberg, A. J. P. White, D. J. Williams, *J*. *Am. Chem. Soc.* **1999,** *121,* 8728). CrCl₃(THF)₃ was prepared as previously reported (P. Boudjouk, J.-H. So, *Inorg. Synth.* **1992,** *29,* 108).

### Complex 1. [2,6-bis [(4S)-isopropyl-2-oxazolin-2-yl] pyridine] CrCl₃.

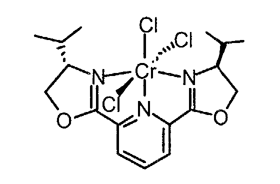

A solution of CrCl₃(THF)₃ (248 mg, 0.66 mmol) in acetone (10 mL) was treated with the stoichiometric amount of 2,6-bis[(4*S*)-isopropyl-2-oxazolin-2-yl]pyridine (200 mg, 0.66 mmol) and it was heated at 56 °C overnight. The resulting green solution was evaporated to ca. 0.5 mL and diethyl ether was added to afford a green solid that was washed repeatedly with diethyl ether (4 x 10 mL) and dried in vacuo. Yield: 249 mg (82 %). Anal. Calcd. for C₁₇H₂₃Cl₃CrN₃O₂: C, 44.41; H, 5.09; N, 9.14. Found: C, 44.74 H, 5.23; N, 8.85. IR (Nujol, cm⁻¹): 1647, 1622, 1580, 1493, 1409, 1284, 1259, 1210, 1080, 1049, 1033, 961, 922, 830, 755, 398, 364, 355, 314. MS (FAB⁺): *m*/*z* 423 (M⁺ - Cl), 388 (M⁺ - 2 Cl).

The structure of Complex 1 could be further elucidated by X-ray crystallography. C₁₇H₂₃Cl₃CrN₃O₂ CH₂Cl₂ (Mw=544.66); orthorhombic space group, P2₁2₁2₁; a=12.1292(13) Å, b=12.2378(13) Å, c=16.3811(18) Å at 173(2) K, V=2431.5(5) Å³; Z=4. An irregular green crystal (0.30 x 0.26 x 0.22 mm) was mounted on a Bruker Smart APEX CCD diffractometer equipped with a normal focus, 2.4 kW sealed tube X-ray source (Molybdenum radiation, λ=0.71073Å) operating at 50kV and 30 mA. Data were collected over a hemisphere by a combination of three sets. The cell parameters were determined and refined by least-squares fit of all collected reflections. Each frame exposure time was 10s covering 0.3° in ω (2 ≤ *2*θ ≤ 60°, 25438 reflections, 5895 unique (merging R factor 0.0987)). The first 100 frames were collected at the end of the data collection to monitor crystal decay. Absorption correction was performed with SADABS program. (This is based on the method of Blessing: Blessing, R. H. *Acta Crystallogr., Sect. A* **1995,** *51,* 33). The structure was solved by Patterson and Fourier methods and refined by full Matrix least-square using the Bruker SHELXTL program package (Bruker Analytical X-ray Systems, Madison, Wisconsin) minimizing ω(Fₒ²-F_{c}²)². (The molecule crystallizes with a dichroromethane solvent molecule). Weighted R factors (R_{w}) and goodness of fit (S) are based on F², conventional R factors are based on F The non-hydrogen carbon atoms were anisotropically refined. The hydrogen atoms were observed or calculated and refined riding to bonded carbon atoms. Final *R*_{*1*} [F²> 2σ(F²)]= 0.0508, *wR*_{*2*} [all data]= 0.1160 and *S*^{C}[all data]=0.951.

### Selected Bond Lengths (Å) and Angles (deg) for complex 1

| | | | |
|---|---|---|---|
| Cr-N(1) | 2.087(3) | Cr-Cl(1) | 2.2841(11) |
| Cr-N(2) | 2.036(3) | Cr-Cl(2) | 2.3013(10) |
| Cr-N(3) | 2.093(3) | Cr-Cl(3) | 2.3053(11) |
| N(1)-Cr-N(2) | 76.41(11) | N(2)-Cr-Cl(1) | 179.01(9) |
| N(1)-Cr-N(3) | 153.21(12) | N(2)-Cr-Cl(2) | 87.95(8) |
| N(2)-Cr-N(3) | 76.79(12) | N(2)-Cr-Cl(3) | 87.87(8) |
| N(1)-Cr-Cl(1) | 102.92(8) | N(3)-Cr-Cl(1) | 103.87(10) |
| N(1)-Cr-Cl(2) | 91.03(8) | N(3)-Cr-Cl(2) | 88.03(9) |
| N(1)-Cr-Cl(3) | 86.04(8) | N(3)-Cr-Cl(3) | 92.96(9) |
| Cl(1)-Cr-Cl(2) | 91.34(4) | Cl(1)-Cr-Cl(3) | 92.82(5) |
| Cl(2)-Cr-Cl(3) | 175.36(5) | | |

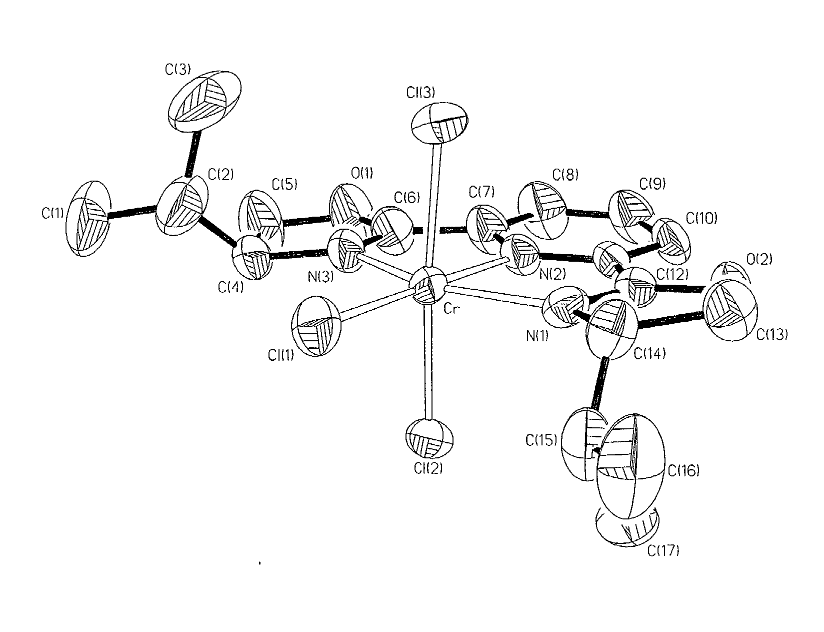

### Complex 2. [2,6-bis{1-[2,6-(diisopropylphenyl)imino]ethyl}pyridine]CrCl₃.

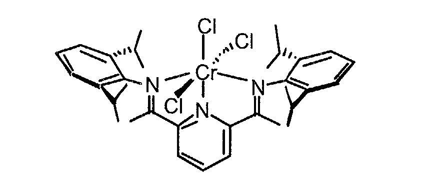

A solution of CrCl₃(THF)₃ (500 mg, 1.33 mmol) and 2,6-bis{1-[2,6-(diisopropylphenyl)imino]ethyl}pyridine (643 mg, 1.33 mmol) in acetone (15 mL) was refluxed for 12 hours, resulting a green solution. The reaction volume was concentrated, and pentane was added to afford a green solid, which was separated and washed repeatedly with pentane. This solid was recrystallised from CH₂Cl₂/ diethyl ether. Yield: 769 mg (90 %). Anal. Calcd. for C₃₃H₄₃Cl₃CrN₃: C, 61.92; H, 6.77; N, 6.56. Found: C, 61.96; H, 6.82; N, 5.97. IR (Nujol, cm⁻¹): 1579, 1274, 1215, 937, 802, 778, 399, 371. MS (FAB⁺): *m*/*z* 603 (M⁺ - Cl), 568 (M⁺ - 2 Cl).

The cyclic voltammogram of a dichloromethane solution of this complex does not show any reduction process (between 1.6 V and -1.6 V).

The structure of Complex 2 was further elucidated by X-Ray diffraction: C₃₃H₄₃Cl₃CrN₃ 0.75CH₂Cl₂ (Mw=703.75); monoclinic space group, P2₁/c; a=14.0857(8) Å, b=16.4910(8) Å, c=16.6779(9) Å, β=95.9470(10)° at 293(2) K, V=3853.2(4) Å³; Z=4. An irregular green crystal (0.28 x 0.20 x 0.08 mm) was mounted on a Bruker Smart APEX CCD diffractometer equipped with a normal focus, 2.4 kW sealed tube X-ray source (Molybdenum radiation, λ=0.71073Å) operating at 50kV and 40 mA. Data were collected over a hemisphere by a combination of three sets. The cell parameters were determined and refined by least-squares fit of all collected reflections. Each frame exposure time was 10s covering 0.3° in ω (2 ≤ *2θ ≤* 50°, 29261 reflections, 6776 unique (merging R factor 0.1474)). The first 100 frames were collected at the end of the data collection to monitor crystal decay. Absorption correction was performed with SADABS program. (This is based on the method of Blessing: Blessing, R. H. *Acta Crystallogr., Sect. A* **1995,** *51,* 33). The structure was solved by Patterson and Fourier methods and refined by full Matrix least-square using the Bruker SHELXTL program package (Bruker Analytical X-ray Systems, Madison, Wisconsin) minimizing ω(Fₒ²-F_{c}²)². (The molecule crystallizes with 0.75 dichroromethane solvent molecules). Weighted R factors (R_{w}) and goodness of fit (S) are based on F², conventional R factors are based on F. The non-hydrogen carbon atoms were anisotropically refined. The hydrogen atoms were observed or calculated and refined riding to bonded carbon atoms. Final *R*_{*1*} [F²> 2σ(F²)]= 0.0755, *wR*_{*2*} [all data]= 0.2054 and *S*^{c}[all data]=0.876.

### Selected Bond Lengths (A) and Angles (deg) for complex 2

| | | | |
|---|---|---|---|
| Cr-N(1) | 1.995(5) | Cr-Cl(1) | 2.3130(19) |
| Cr-N(2) | 2.162(5) | Cr-Cl(2) | 2.2875(18) |
| Cr-N(3) | 2.179(5) | Cr-Cl(3) | 2.2806(19) |
| N(1)-Cr-N(2) | 77.0(2) | N(2)-Cr-Cl(1) | 91.89(14) |
| N(1)-Cr-N(3) | 77.2(2) | N(2)-Cr-Cl(2) | 90.44(14) |
| N(2)-Cr-N(3) | 154.0(2) | N(2)-Cr-Cl(3) | 99.18(16) |
| N(1)-Cr-Cl(1) | 83.67(15) | N(3)-Cr-Cl(1) | 88.68(14) |
| N(1)-Cr-Cl(2) | 89.23(15) | N(3)-Cr-Cl(2) | 85.81(13) |
| N(1)-Cr-Cl(3) | 174.67(15) | N(3)-Cr-Cl(3) | 106.77(15) |
| Cl(1)-Cr-Cl(2) | 171.83(8) | Cl(1)-Cr-Cl(3) | 92.84(7) |
| Cl(2)-Cr-Cl(3) | 94.53(7) | | |

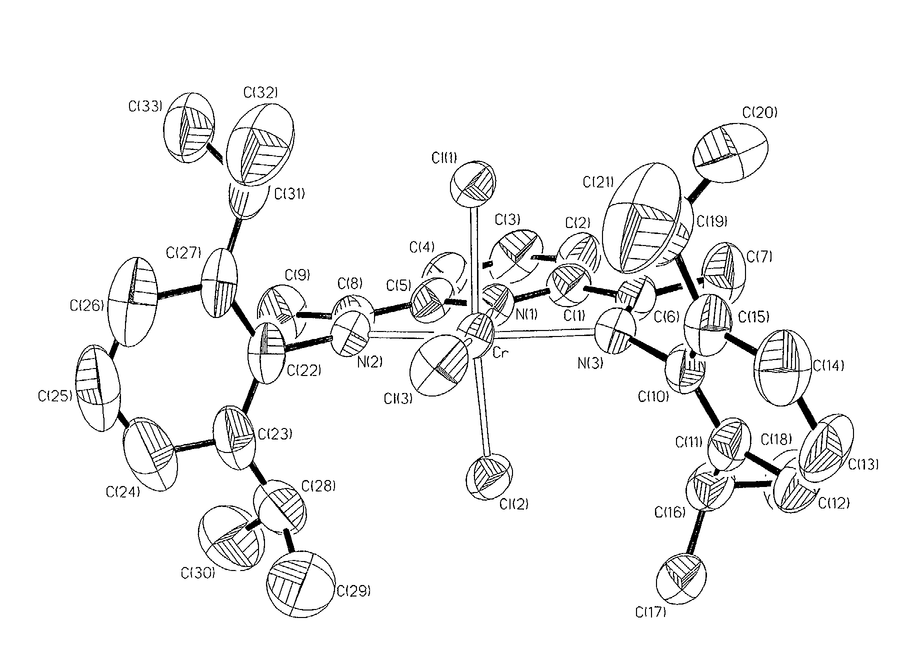

### Complex 3. [2,6-bis{1-[2-(tert-butylphenyl)imino] ethyl}pyridine]CrCl₃.

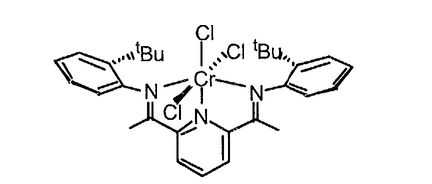

A solution of CrCl₃(THF)₃ (500 mg, 1.33 mmol) and 2,6-bis{1-[2-(*tert*-butylphenyl)imino]ethyl}pyridine (568 mg, 1.33 mmol) in acetone (10 mL) was refluxed overnight. The resulting green solution was evaporated to ca. 0.5 mL and diethyl ether was added to afford a green solid that was separated and washed repeatedly with diethyl ether (4 x 5 mL) and dried in vacuo. Yield: 584 mg (75 %). Anal. Calcd. for C₂₉H₃₅Cl₃CrN₃: C, 59.65; H, 6.04; N, 7.20. Found: C, 59.36; H, 6.42; N, 7.35. IR (Nujol, cm⁻¹): 1578, 1286, 1088, 1043, 817, 760, 399, 352. MS (FAB⁺): *m*/*z* 547 (M⁺ - Cl), 512 (M⁺ - 2 Cl).

### Complex 4. [2,6-bis{1-[2,4,6-(trimethylphenyl)imino]ethyl}pyridine]CrCl₃.

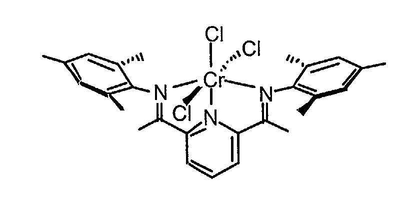

A solution of CrCl₃(THF)₃ (500 mg, 1.33 mmol) and 2,6-bis{1-[2,4,6-(trimethylphenyl)imino]ethyl}pyridine (530 mg, 1.33 mmol) in acetone (15 mL) was refluxed overnight, resulting a green suspension. The reaction volume was concentrated and the green solid formed was separated and washed repeatedly with acetone (4 x 5 mL). Yield: 482 mg (65 %). Anal. Calc. for C₂₇H₃₁N₃CrCl₃: C, 58.34; H, 5.62; N, 7.56. Found: C, 58.24; H, 5.68; N, 7.17. IR (Nujol, cm-1): 1577, 1269, 1224, 1210, 1100, 1042, 862, 855, 809, 402, 350. MS (FAB⁺): *m*/*z* 519 (M⁺ - Cl), 484 (M⁺ - 2 Cl).

### Complex 5. [2,6-bis{1-[2,6-(dimethylphenyl)imino]ethyl}pyridine]CrCl₃.

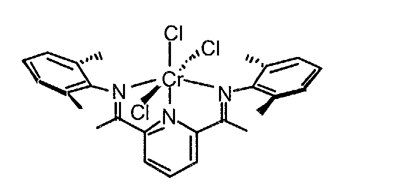

A solution of CrCl₃(THF)₃ (500 mg, 1.33 mmol) 2,6-bis{1-[2,6-(dimethylphenyl)imino]ethyl}pyridine (493 mg, 1.33 mmol) in acetone (15 mL) was refluxed for 5 hours, resulting a green suspension. The reaction volume was concentrated, and the green solid formed was separated and washed repeatedly with acetone (4 x 5 mL). Yield: 521 mg (74 %). Anal. Calc. for C₂₅H₂₇N₃CrCl₃: C, 56.89; H, 5.16; N, 7.96. Found: C, 56.55; H, 5.46; N, 7.61. IR (Nujol, cm-1): 1575, 1271, 1220, 1106, 1067, 1043, 817, 785, 766, 406, 356. MS (FAB⁺): *m*/*z* 491 (M⁺ - Cl), 456 (M⁺ - 2 Cl).

### Complex 6. [2,6-bis{1-[2,6-(diethylphenyl)imino] ethyl}pyridine]CrCl₃.

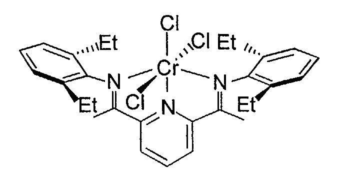

### Preparation of the ligand, 2,6-bis{1-[(2,6-diethylphenyl)imino]ethyl}pyridine

2,6-diethylaniline (1.5 mL, 9.2 mmol) was added to a solution of 2,6-diacetylpyridine (500 mg, 3 mmol) in absolute ethanol (12 mL). After the addition of several drops of glacial acetic acid, the solution was refluxed for 48 hours. Upon cooling at room temperature, the product crystallized from ethanol. The yellow solid formed was washed (3 x 5 mL) with cold ethanol and it was dried in vacuo at 60 °C for one day. Yield: 540 mg (48 %). ¹H NMR (CDCl₃, 300 MHz): δ 8.47 (d, 2H, *J*_{H-H} = 7.8 Hz, py-H_{*m*}), 7.91 (t, 1H, *J*_{H-H} = 7.8 Hz, py-H_{*p*}), 7.12-7.00 (m, 6H, Ph), 2.37 (m, 8H, - C*H*₂CH₃), 2.23 (s, 6H, N=C*Me*), 1.13 (m; 8H, -CH₂C*H*₃). ¹³C{¹H} NMR (CDCl₃, 75.4 MHz): δ 167.1 (N=C), 155.3 (py, Cₒ), 147.9 (Ar-Cᵢₚ), 137.0 (py, Cₚ), 131.3 (Ar-Co), 126.0 (Ar-Cm), 123.4 (Ar-Cp), 122.3 (py, Cₘ), 24.5 (CH₂CH₃), 16.7 (N=C-*Me*), 13.6 (CH₂CH₃).

### Preparation of the complex

A solution of CrCl₃(THF)₃ (500 mg, 1.33 mmol) and [2,6-bis{1-[2,6-(diethylphenyl)imino]ethyl}pyridine (568 mg, 1.33 mmol) in acetone (15 mL) was refluxed for 6 hours, resulting a green suspension. The reaction volume was concentrated, and diethyl ether was added to afford a green solid, which was separated and washed repeatedly with diethyl ether and dried in vacuo. Yield: 756 mg (97 %). Anal. Calc. for C₂₉H₃₅N₃CrCl₃: C, 59.65; H, 6.04; N, 7.19. Found: C, 59.32; H, 6.43; N, 7.38. IR (Nujol, cm⁻¹): 1579, 1263, 1043, 817, 399, 353. MS (FAB⁺): *m*/*z* 547 (M⁺ -Cl).

### Complex 7. [2,6-bis{1-[(2-methyl-6-isopropylphenyl)imino]ethyl}pyridine]CrCl₃.

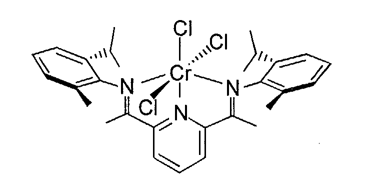

### Preparation of the ligand, 2,6-bis{1-[(2-methyl-6-isopropylphenyl)imino]ethyl}pyridine

2-methyl-6-isopropylaniline (1.45 mL, 9.2 mmol) was added to a solution of 2,6-diacetylpyridine (500 mg, 3 mmol) in absolute ethanol (12 mL). After the addition of several drops of glacial acetic acid, the solution was refluxed for 48 hours. Upon cooling at room temperature, the product crystallized from ethanol. The pale yellow solid formed was washed with cold ethanol (2 x 6 mL) and it was dried in vacuo at 60 °C for two days. Yield: 1.02 g (78 %). ¹H NMR (CDCl₃, 300 MHz): δ 8.46 (d, 2H, *J*_{H-} _{H} = 7.9 Hz, py-H_{*m*}), 7.90 (t, 1H, *J*_{H-H} = 7.9 Hz, py-H_{*p*}), 7.17-6.98 (m, 6H, Ph), 2.81 (spt, 2H, *J*_{H-H} = 6.8 Hz, C*H*(CH₃)₂), 2.24 (s, 6H, N=C*Me*), 2.02 (s, 6H, Me), 1.18 (d, 6H, *J*_{H-H} = 6.8 Hz, CH(C*H*₃)₂), 1.12 (d, 6H, *J*_{H-H} = 6.8 Hz, CH(C*H*₃)₂). ¹³C{¹H} NMR (CDCl₃, 75.4 MHz, plus APT): δ 167.3 (N=C), 155.3 (py, Cₒ), 147.7 (Ar, Cᵢₚ), 136.9 (py, Cₚ), 136.4 (Ar, Cₒ), 127.8 (Ar, Cₚ), 125.1 (Ar, Cₒ), 123.4 (Ar, Cₘ), 123.2 (Ar, Cₘ), 122.3 (py, Cₘ), 28.2 (CH(CH₃)₂), 23.0 (CH(CH₃)₂), 22.7 (CH(CH₃)₂), 18.0 (N=C-*Me*), 16.7 (*Me*).

### Preparation of the complex

A solution of CrCl₃(THF)₃ (500 mg, 1.33 mmol) and 2,6-bis{1-[(2-methyl-6-isopropylphenyl)imino]ethyl}pyridine (568 mg, 1.33 mmol) in acetone (15 mL) was heated at 56 °C overnight, resulting a green suspension. The reaction volume was concentrated, and diethyl ether was added to afford a green solid, which was separated and washed repeatedly with diethyl ether (5 x 10 mL) and dried in vacuo. Yield: 670 mg (94 %). Anal. Calc. for C₂₉H₃₅N₃CrCl₃·1.5H₂O: C, 57.01; H, 6.27; N, 6.88. Found: C, 56.75; H, 6.41; N, 6.75. IR (Nujol, cm⁻¹): 1579, 1515, 1273, 1219. 357. MS (FAB⁺): *m*/*z* 547 (M⁺ - Cl).

### Complex 8. [2,6-bis{1-[2-(trifluoromethylphenyl)imino]ethyl}pyridine]CrCl₃.

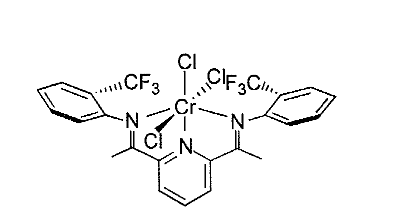

### Preparation of the ligand, 2,6-bis{1-[(2-trifluoromethylphenyl)imino]ethyl}pyridine

2-trifluoromethylaniline (1.15 mL, 9.2 mmol) was added to a solution of 2,6-diacetylpyridine (500 mg, 3 mmol) in absolute ethanol (12 mL). After the addition of several drops of glacial acetic acid, the solution was refluxed for 48 hours. Upon cooling at room temperature, the reaction volume was reduced to afford a pale yellow solid, that was washed with ethanol at 0 °C, and dried at vacuo. Yield: 668 mg (48.5%). ¹H NMR (CDCl₃, 300 MHz): δ 8.35 (d, 2H, *J*_{H-H} = 7.8 Hz, py-H_{*m*}), 7.90 (t, 1H, *J*_{H-H} = 7.8 Hz, py-H_{*p*}), 7.67 (d, 2H, *J*_{H-H} = 7.8 Hz, Ph), 7.51 (d, 2H, *J*_{H-H} = 7.7 Hz, Ph), 7.17 (d, 2H, *J*_{H-H} = 7.7 Hz, Ph), 6.79 (d, 2H, *J*_{H-H} = 7.8 Hz, Ph), 2.35 (s, 6H, N=C*Me*). ¹⁹F NMR (CDCl_{3,} 279 MHz): δ -64.3 (-CF₃). ¹³C{¹H} NMR (CDCl₃, 75.4 MHz): δ 168.7 (N=C), 155.0 (py, Cₒ), 149.7 (Ar, Cᵢₚ), 137.3 (py, Cp), 132.7 (Ar), 126.5 (q, *J*_{F-C} = 5 Hz, Ar), 124 (q, *J*_{F-C} = 273 Hz, CF₃), 123.3 (Ar), 123.1 (py, Cₘ), 119.8 (Ar), 16.7 (N=C-*Me*).

### Preparation of the complex

A solution of CrCl₃(THF)₃ (500 mg, 1.33 mmol) and 2,6-bis{1-[2-(trifluoromethylphenyl)imino]ethyl}pyridine (600 mg, 1.33 mmol) in dichloromethane (20 mL) was stirred at room temperature for 5 hours. During this time a green solution was obtained, that was filtered through Celite. The reaction volume was concentrated, and diethyl ether was added to afford a green solid, which was separated and washed repeatedly with diethyl ether. Yield: 446 mg (52 %). Anal. Calc. for C₂₃H₁₇F₆N₃CrCl₃·2H₂O: C, 42.91; H, 3.29; N, 6.53. Found: C, 43.07; H, 3.07; N, 6.26. IR (Nujol, cm⁻¹): 1604, 1584, 1318, 1175, 1121, 1060, 1038, 767, 363. MS (FAB⁺): *m*/*z* 571 (M⁺ - Cl).

### Complex 9. [2,6-bis{1-(cyclohexylimino)ethyl}pyridine]CrCl₃.

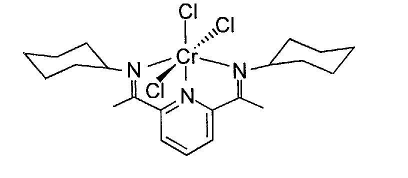

### Preparation of the ligand, 2,6-bis{1-(cyclohexylimino)ethyl}pyridine

Cyclohexylamine (1.4 mL, 12 mmol) was added to a solution of 2,6-diacetylpyridine (500 mg, 3 mmol) in absolute ethanol (10 mL). After the addition of several drops of glacial acetic acid the solution was refluxed for 48 hours. Upon cooling at room temperature, the product crystallized from ethanol. The pale yellow solid formed was washed with cold ethanol (4 x 4 mL). Yield: 421.2 mg (42%). MS (EI): *m*/*z* 325.5 (M⁺). ¹H NMR (CDCl₃, 300 MHz): δ 8.04 (d, 2H, *J*_{H-H} = 7.8 Hz, py-H_{*m*}), 7.66 (t, 1H, *J*_{H-H} = 7.8 Hz, py-H_{*p*}), 3.55 (m, 2H, -CH, Cy), 2.39 (s, 6H, N=C*Me*), 1.84-1.24 (m, 20H, -CH₂-, Cy). ¹³C{¹H} NMR (CDCl₃, 75.4 MHz, plus APT): δ 164.4 (N=C), 156.9 (py, Cₒ), 136.8 (py, Cₚ), 121.3 (py, Cₘ), 60.3 (N-CH), 33.5 (-CH₂-), 25.8 (-CH₂-), 24.9 (-CH₂-), 13.5 (N=C-*Me*).

### Preparation of the complex

A solution of CrCl₃(THF)₃ (500 mg, 1.33 mmol) and 2,6-bis{1-(cyclohexylimino)ethyl}pyridine (435 mg, 1.33 mmol) in dichloromethane (20 mL) was refluxed for 12 hours, resulting a green solution that was filtered through Celite. The reaction volume was concentrated, and diethyl ether was added to afford a green solid, which was separated and washed repeatedly with diethyl ether. Yield: 549 mg (82 %). Anal. Calc. for C₂₁H₃₁N₃CrCl₃·1.5H₂O: C, 49.37; H, 6.71; N, 8.22. Found: C, 49.24; H, 6.83; N, 7.96. IR (Nujol, cm⁻¹): 1579, 1282, 1200, 891, 805, 350, 290. MS (FAB⁺): *m*/*z* 447 (M⁺ - Cl).

### Complex 10: {2-[1-(2-trifluoromethylphenylimino)ethyl]-6-[1-(2,4,6-trimethylphenylimino)ethyl]pyridine}CrCl₃.

### Preparation of ligand:

(a) Preparation of 2-acetyl-6-[1-(2,4,6-trimethylphenylimino)ethyl]pyridine: 2,4,6-trimethylaniline (731 µL, 5.2 mmol) was added to a solution of 2,6-diacetylpyridine (1 g, 6.1 mmol). After the addition of 0.1 mg of *p*-toluenesulfonic acid, the solution was refluxed for 45 min. During this time the water of the solution was removed using a Dean-Stark apparatus. Upon cooling at room temperature, the solution was concentrated in vacuo, and methanol added to afford a yellow solid that was washed with methanol and dried in vacuo. Yield: 560 mg (38%). MS (EI): *m*/*z* 280 (M⁺). ¹H NMR (CDCl₃, 300 MHz): δ 8.56 (d, 1H, *J*_{H-} _{H} = 7.8, py-H_{*m*}), 8.12 (d, *J*_{H-H} = 7.8, 1H, py-H_{*m*}), 7.93 (t, *J*_{H-H} = 7.8, 1H, py-H_{*p*}), 6.89 (s, 2 H, ArMe₃), 2.78 (s, 3H, Me), 2.29 (s, 3H, Me), 2.22 (s, 3H, Me), 1.99 (s, 6H, 2 Me). ¹³C{¹H} NMR (CDCl₃, 75.4 MHz): δ 199.9 (C=O), 166.7 (C=N), 155.6, 152.4, 145.9, 137.2, 132.3, 128.5, 125.2, 124.4, 122.5 (py and ar), 25.6, 20.6, 17.8, 16.2. (Me).

**(b)** Preparation of 2-[1-(2-trifluoromethylphenylimino)ethyl]-6-[1-(2,4,6-trimethylphenylimino)ethyl]pyridine: 2-trifluoromethylaniline (134 µL, 1.07 mmol) was added to a solution of 2-acetyl-6-[1-(2,4,6-trimethylphenylimino)ethyl]pyridine (300 mg, 1.07 mmol) in toluene (10 mL). After the addition of 0.1 mg of *p*-toluenesulfonic acid, the solution was refluxed for 15 hours. During this time, the water of the solution was removed using a Dean-Stark apparatus. Upon cooling at room temperature, the solution was concentrated in vacuo and methanol added to afford a yellow solid, that was washed with methanol and dried in vacuo. Yield: 326 mg (72%). MS (EI): *m*/*z* 423 (M⁺). ¹H NMR (CDCl₃, 300 MHz): δ 8.47 (dd, *J*_{H-H} = 7.8, *J*_{H-H} = 3.8, 1H, py), 8.37 (d, *J*_{H-H} = 7.7, *J*_{H-H} = 3.8, 1H, py), 7.91 (t, *J*_{H-H} = 7.8, 1H, py), 7.69 (d, *J*_{H-H} = 7.5, 1H, Ar-CF₃), 7.53 (t, *J*_{H-H} = 7.7, 1H, Ar-CF3), 7.19 (t, *J*_{H-H} = 7.7, 1H, Ar-CF₃), 6.90 (s, 2 H, ArMe₃), 6.82 (d, *J*_{H-H} = 7.7, 1H, Ar-CF3), 2.38 (s, 3H, Me), 2.30 (s, 3H, Me), 2.24 (s, 3H, Me), 2.02 (s, 6H, ArMe₂). ¹⁹F NMR (CDCl₃, 279 MHz): δ -62.5. ¹³C{¹H} NMR (CDCl₃, 75.4 MHz): δ 168.7 (N=C), 167.4 (N=C), 167.2, 155.2, 154.9, 149.6, 146.2, 136.9, 132.5, 132.2, 128.4, 126.4 (q, *J*_{F-C} = 5 Hz), 125.2, 123.1, 122.7, 122.5, 122.1, 119.7 (py and ar), 20.7 (Ar-Me), 17.8 (Ar-Me₂), 16.8 (N=C-*Me*), 16.4 (N=C-*Me*).

### Preparation of Complex:

A solution of CrCl₃(THF)₃ (250 mg, 0.67 mmol) and 2-[1-(2-trifluoromethylphenylimino)ethyl]-6-[1-(2,4,6-trimethylphenylimino)ethyl] pyridine (282 mg, 0.67 mmol) in dichloromethane (10 mL) was stirred at room temperature for 6 hours. resulting a green suspension. The reaction volume was concentrated to ca. 1 mL, and pentane was added to afford a green solid, which was washed repeatedly with pentane and dried in vacuo. Yield: 307 mg (79 %). Anal. Calcd. for C₂₅H₂₄Cl₃F₃CrCl₃: C, 51.61; H, 4.16; N, 7.22. Found: C, 52.04; H, 4.38; N, 6.91. IR (Nujol, cm⁻¹): 1578, 1319, 1270, 1175, 1122, 1060, 1037, 357. MS (FAB⁺): *m*/*z* 546 (M⁺ - Cl), 520 (M⁺ - 2 Cl), 485 (M⁺ - 3 Cl).

### Complex 11. [2,6-bis{1-[2,6-(diisopropylphenyl)imino]ethyl}pyridine]CrCl₂.

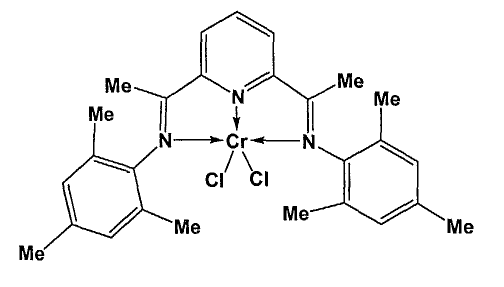

This complex was prepared according to the procedure described in WO 00/66923. The complex was isolated as a purple solid that became immediately green upon exposure to air. The same behavior was observed in solution.

The cyclic voltammogram of a dichloromethane solution of this compound shows a single oxidation at around -0.6 V, and the process is electrochemically irreversible.

### Polymerization Examples

### General Procedures:

### Polymerization at a pressure of 4 bar:

An autoclave glass reactor vessel of 1.3 L was employed for the polymerization experiments. The reactor was charged with 600 mL of heptane, degassed and saturated with ethylene to a pressure of 4 bar at the set temperature. Polymerizations were effected at a constant pressure, being the consumption of ethylene monitored by means of a Tylan Mass Flowmeter Model FM 380. Temperature was measured by means of a PT-100 probe immersed in the reaction solvent. Regulation of the temperature was provided by a combination of heating and cooling systems operating simultaneously by passing two fluids through two external jackets at the walls of the reactor vessel. The heating was effected with oil from a circulating oil-bath (Haake N3). Refrigeration was obtained from cold tap-water controlled by an electrovalve connected to a Toho TM-104 controller. Ethylene (SEO, N35) was further purified by passing it through activated molecular sieve (13 X, 4Å) and activated alumina beds. Methylaluminoxane (MAO, 10 % in toluene), triisobutylaluminium (TIBA, 1 M in heptane), tetraisobutylaluminoxane (TIBAO, 20% in heptane) and isobutylaluminoxane (IBAO, 15% in heptane) were purchased from Witco. B(C₆F₅)₃ (3% in Isopar) was purchased from Fluka.
¹³C NMR Polymer analyses were performed in 1,2,4-trichlorobencene at 378 K, being the assignments of the signals made according to Randall, Rev. Macromol. Chem. Phys., 1989, C29, 201-317. End groups with Iso configuration were assigned according to the following chemical shifts:

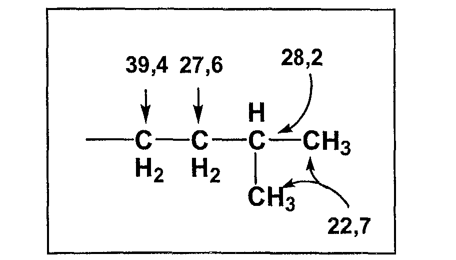

Molecular weight determinations of the polymers by Gel Permeation Chromatography and thermal analysis by Differential Scanning Calorimetry were performed at the Gidem in the Consejo Superior de Investigaciones Cientificas in Madrid.
Abbreviations employed:
   MAO - Methylaluminoxane
   TEA - Triethylaluminium
   TIBA - Triisobutylaluminium
   TIBAO - Tetraisobutylaluminoxane
   IBAO - Isobutylaluminoxane
   NMR - Nuclear Magnetic Resonance
   GPC - Gel Permeation Chromatography
   DSC - Differential Scanning Calorimetry

### Example 1

### Polymerization of ethylene with Complex 2

The temperature was set at 70°C. TIBA in heptane (1.0 M) was then added (3.0 mL) to the vessel before 2.3 mL (0.014 mmol) of a pre-formed solution of Complex 2 in MAO/toluene which had been left stirring at room temperature for 7 h before it was added too. Ethylene was continuously supplied in order to keep a constant pressure. The consumption of ethylene was maintained for 30 min. Afterwards, the polymerization mixture was added to a methanol/HCl solution. Filtration, washing and drying of the resulting solid (70°C/10 mm Hg for ca. 20 h) gave 33.6 g of a white powder (Linear polyethylene according to the ¹³CNMR spectrum with 1.41 vinyl groups, 0.74 Iso end groups and 3.72 end methyl groups per 1000 C; GPC: Mw = 18.200, Mw/Mn = 2.51). The filtrates were decanted and the upper layer was evaporated under vacuum resulting in 0.28 g of a white waxy material. (Total Activity = 1.18 E+06 g PE/(mol Cr bar h)).

### Example 2

### Polymerization of ethylene with Complex 2

The temperature was set at 70°C. TIBAO in heptane (20%) was then added (5.6 mL) to the vessel before 1.1 mL (0.0069 mmol) of a pre-formed solution of Complex 2 in MAO/toluene which had been left stirring at room temperature for 3 h before it was added too. Ethylene was continuously supplied in order to keep a constant pressure. The consumption of ethylene was maintained for 30 min. Afterwards, the polymerization mixture was added to a methanol/HCl solution. Filtration, washing and drying of the resulting solid (70°C/10 mm Hg for ca. 20 h) gave 16.26 g of a white powder (Linear polyethylene according to the ¹³CNMR spectrum with 0.94 vinyl groups, 0.40 Iso end groups and 2.26 end methyl groups per 1000 C; GPC: Mw = 18.100, Mw/Mn = 1.95). The filtrates were decanted and the upper layer was evaporated under vacuum resulting in 0.13 g of a white waxy material. (Total Activity = 1.18 E+06 g PE/(mol Cr· bar h)).

### Example 3

### Polymerization of ethylene with Complex 2

The temperature was set at 70°C. IBAO in heptane (15%) was then added (0.9 mL) to the vessel before 1.1 mL (0.0069 mmol) of a pre-formed solution of Complex 2 in MAO/toluene which had been left stirring at room temperature for 1 h before it was added too. Ethylene was continuously supplied in order to keep a constant pressure. The consumption of ethylene was maintained for 30 min. Afterwards, the polymerization mixture was added to a methanol/HCl solution. Filtration, washing and drying of the resulting solid (70°C/10 mm Hg for ca. 20 h) gave 15.65 g of a white powder. The filtrates were decanted and the upper layer was evaporated under vacuum resulting in 0.12 g of a white waxy material. (Total Activity = 1.15 E+06 g PE/(mol Cr· bar· h)).

### Example 4

### Polymerization of ethylene with Complex 2

The temperature was set at 70°C. TIBAO in heptane (20%) was then added (1.5 mL) to the vessel before 0.6 mL (0.0075 mmol) of a pre-formed solution of Complex 2 in MAO/toluene which had been left stirring at room temperature for 1.5 h before it was added too. Ethylene was continuously supplied in order to keep a constant pressure. The consumption of ethylene was maintained for 30 min. Afterwards, the polymerization mixture was added to a methanol/HCl solution. Filtration, washing and drying of the resulting solid (70°C/10 mm Hg for ca. 20 h) gave 15.74 g of a white powder (Linear polyethylene according to the ¹³CNMR spectrum with 1.03 vinyl groups and 1.53 end methyl groups per 1000 C; GPC: Mw = 32.200, Mw/Mn = 1.29). The filtrates were decanted and the upper layer was evaporated under vacuum resulting in 0.04 g of a white waxy material. (Total Activity = 1.05 E+06 g PE/(mol Cr· bar· h)).

### Example 5

### Polymerization of ethylene with Complex 4

The temperature was set at 45°C. MAO in toluene was then added (1.0 mL) to the vessel before 0.5 mL (0.0054 mmol) of a pre-formed solution of Complex 4 in MAO/toluene was added too. Ethylene was continuously supplied in order to keep a constant pressure. The consumption of ethylene was maintained for 45 min. During this period the temperature raised up to 70°C, uncontrolled by the refrigeration system. After this period the polymerization mixture was added to a methanol/HCl solution. Filtration, washing and drying of the resulting solid (70°C/10 mm Hg for ca. 20 h) gave 142.44 g of a white powder (Linear polyethylene according to the ¹³CNMR spectrum with 19.44 vinyl groups and 20.14 end methyl groups per 1000 C; GPC: Mw = 1.560, Mw/Mn = 1.93). The filtrates were decanted and the upper layer was evaporated under vacuum resulting in 8.4 g of a white waxy material (Linear polyethylene according to the ¹³CNMR spectrum with 41.56 vinyl groups and 41.72 end methyl groups per 1000 C; GPC: Mw = 640; Mw/Mn = 1.0). (Total Activity = 9.32 E+06 g PE/(mol Cr· bar· h)).

### Example 6

### Polymerization of ethylene with Complex 4

The temperature was set at 70°C. MAO in toluene was then added (1.0 mL) to the vessel before 0.2 mL (0.0075 mmol) of a pre-formed solution of Complex 4 in MAO/toluene was added too. Ethylene was continuously supplied in order to keep a constant pressure. The consumption of ethylene was maintained for ca. 4 min. During this period the temperature raised up to 75°C, uncontrolled by the refrigeration system. Afterwards, the polymerization mixture was added to a methanol/HCl solution. Filtration, washing and drying of the resulting solid (70°C/10 mm Hg for ca. 20 h) gave 17.65 g (Activity = 4.14 E+07 g PE/(mol Cr· bar h)) of a white powder (Linear polyethylene according to the ¹³CNMR spectrum with 11.56 vinyl groups and 12.71 end methyl groups per 1000 C). GPC: Mw = 2.100, Mw/Mn = 1.31. DSC: Tmax = 114 °C, ΔHm = -242 J/g.

### Example 7

### Co-polymerization of ethylene and 1-hexene with Complex 4

The temperature was set at 70°C. To this, 15 mL of 1-hexene was also added. MAO in toluene was then added (0.8 mL) to the vessel before 0.1 mL (0.0009 mmol) of a pre-formed solution of Complex 4 in MAO/toluene was added too. Ethylene was continuously supplied in order to keep a constant pressure. The consumption of ethylene was maintained for ca. 30 min. During this period the temperature reached a maximum of 74°C for a couple of minutes, being controlled by the refrigeration system at ca. 70°C most of the time. Afterwards, the polymerization mixture was added to a methanol/HCl solution. Filtration, washing and drying of the resulting solid (70°C/10 mm Hg for ca. 20 h) gave 34.84 g (Activity = 1.83 E+07 g PE/(mol Cr· bar· h)) of a white powder. (Branched polyethylene according to the ¹³CNMR spectrum with 1.13 Bu branches , 12.57 vinyl groups and 13.24 end methyl groups per 1000 C). GPC: Mw = 2.290, Mw/Mn = 1.59. DSC: Tmax = 105 °C, ΔHm = -246 J/g.

### Example 8

### Polymerization of ethylene with Complex 4

The temperature was set at 90°C. MAO in toluene was then added (0.8 mL) to the vessel before 0.1 mL (0.0009 mmol) of a pre-formed solution of Complex 4 in MAO/toluene which had been left stirring at room temperature for > 2 h before it was added too. Ethylene was continuously supplied in order to keep a constant pressure. The consumption of ethylene was maintained for ca. 10 min. Afterwards, the polymerization mixture was added to a methanol/HCl solution. Filtration, washing and drying of the resulting solid (70°C/10 mm Hg for ca. 20 h) gave 5.85 g (Activity = 9.20 E+06 g PE/(mol Cr· bar· h)) of a white powder. (Linear polyethylene according to the ¹³CNMR spectrum with 10.16 vinyl groups and 10.46 end methyl groups per 1000 C). GPC: Mw = 2.660, Mw/Mn = 1.48. DSC: Tmax = 120 °C, ΔHm = -252 J/g.

### Example 9

### Polymerization of ethylene with Complex 4

The temperature was set at 70°C. Triisobutylalumium in heptane (1.0 M) was then added (1.0 mL) to the vessel before 0.1 mL (0.0009 mmol) of a pre-formed solution of Complex 4 in MAO/toluene which had been left stirring at room temperature for > 2 h before it was added too. Ethylene was continuously supplied in order to keep a constant pressure. The consumption of ethylene was maintained for ca. 30 min. During this period the temperature raised up to 74°C for a couple of minutes being controlled by the refrigeration system at ca. 70°C most of the time. Afterwards, the polymerization mixture was added to a methanol/HCl solution. Filtration, washing and drying of the resulting solid (70°C/10 mm Hg for ca. 20 h) gave 29.03 g of a white powder (Activity = 1.52 E+07 g PE/(mol Cr· bar· h)). (Linear polyethylene according to the ¹³CNMR spectrum with 11.85 vinyl groups and 12.97 end methyl groups per 1000 C). GPC: Mw = 1.630, Mw/Mn = 1.48.

### Example 10

### Polymerization of ethylene with Complex 4

The temperature was set at 70°C. MAO in toluene was then added (1.0 mL) to the vessel before 0.1 mL (0.0009 mmol) of a pre-formed solution of Complex 4 in TIBA in heptane (1.0 M) was added too. Ethylene was continuously supplied in order to keep a constant pressure. The consumption of ethylene was maintained for ca. 5.5 min. Afterwards, the polymerization mixture was added to a methanol/HCl solution. Filtration, washing and drying of the resulting solid (70°C/10 mm Hg for ca. 20 h) gave 2.34 g (Activity = 6.96 E+06 g PE/(mol Cr· bar· h)) of a white powder. (Linear polyethylene according to the ¹³CNMR spectrum with 6.17 vinyl groups and 10.14 end methyl groups per 1000 C). GPC: Mw = 3.080, Mw/Mn = 1.18.

### Example 11

### Polymerization of ethylene with Complex 4

The temperature was set at 45°C. Triethylaluminium in toluene (1.0 M) was then added (1.0 mL) to the vessel before 0.3 mL (0.0027 mmol Cr) of a pre-formed solution of Complex 4 and B(C₆F₅)₃ (Cr/B ca. 1.05) in triethylaluminium in toluene (1.0 M) was added too. Ethylene was continuously supplied in order to keep a constant pressure. The consumption of ethylene was maintained for ca. 90 min. Afterwards, the polymerization mixture was added to a methanol/HCl solution. Filtration, washing and drying of the resulting solid (70°C/10 mm Hg for ca. 20 h) gave 1.71 g (Activity = 1.06 E+05 g PE/(mol Cr· bar· h)) of a white powder and fibrils.

### Example 12

### Preparation of supported Complex 4 by pre-polymerization

In a schlenk tube, 0.5 g of silica-MAO TA02794/HL/PQ provided by Witco, 10 mL of dry toluene and 25 mg of Complex 4 were mixed together under nitrogen. To this mixture, 5.0 mL of MAO/Toluene 10% were also added. The schlenk tube was then immersed in an ice bath and the contents stirred with a Teflon magnetic bar at 800 rpm. Ethylene was passed through the schlenk at atmospheric pressure for 4.15 h. The ice bath was then removed, the solvent evaporated in vacuo and the solid dried. The total weight of solids was 2.06 g. From ICP measurements the content of Cr is 0.12% by weight and Al 14.6% by weight.

### Example 13

### Polymerization of ethylene using pre-polymerized catalyst

In a stainless-steel 2 L autoclave heated to reach an internal temperature of 80 °C charged with 1 L isobutane and 0.9 mL of TIBA 1.0 M, ethylene was added up to a total internal pressure of ca. 35 bar. To this, 100 mg of the pre-polymerized catalyst prepared in Example 12 were added by dragging it with an ethylene current and the internal pressure in the reactor increased up to ca. 38 bar. Polymerization started immediately and the ethylene was added continuously in order to keep a constant internal pressure. The consumption of the ethylene was very stable all through the 60 min of duration of the essay. Afterwards the reactor was vented and cooled down to room temperature. The solids were discharged and washed thoroughly with acidified methanol. After drying in vacuo for 20 h the weight of polymer amounted to 150.3 g (Activity = 3.09 E+06 g PE/(mol Cr· bar· h)). (Linear polyethylene according to the ¹³CNMR spectrum with 17.7 vinyl groups and 16.7 end methyl groups per 1000 C). GPC: Mw = 1.470, Mw/Mn = 2.13.

### Example 14

### Polymerization of ethylene with Complex 5

The temperature was set at 70°C. MAO in toluene was then added (0.8 mL) to the vessel before 0.2 mL (0.0019 mmol) of a pre-formed solution of Complex 5 in MAO/toluene was added too. Ethylene was continuously supplied in order to keep a constant pressure. The consumption of ethylene was maintained for ca. 30 min.

Afterwards, the polymerization mixture was added to a methanol/HCl solution. Filtration, washing and drying of the resulting solid (70°C/10 mm Hg for ca. 20 h) gave 38.84 g of a white powder (Linear polyethylene according to the ¹³CNMR spectrum with 13.54 vinyl groups and 14.65 end methyl groups per 1000 C; GPC: Mw = 2.130, Mw/Mn = 1.54; DSC: Tmax = 106 °C, ΔHm = -242 J/g). The filtrates were decanted and the upper layer was evaporated under vacuum resulting in 7.05 g of a white waxy material (Linear according to the ¹³CNMR spectrum with 44.67 vinyl groups and 42.52 end methyl groups per 1000 C). (Total Activity = 1.21 E+07 g PE/(mol Cr· bar· h)).

### Example 15

### Co-polymerization of ethylene and 1-hexene with Complex 5

The temperature was set at 70°C. To this, 15 mL of 1-hexene was also added. MAO in toluene was then added (0.8 mL) to the vessel before 0.2 mL (0.0019 mmol) of a pre-formed solution of Complex 5 in MAO/toluene was added too. Ethylene was continuously supplied in order to keep a constant pressure. The consumption of ethylene was maintained for ca. 30 min. Afterwards, the polymerization mixture was added to a methanol/HCl solution. Filtration, washing and drying of the resulting solid (70°C/10 mm Hg for ca. 20 h) gave 31.25 g of a white powder (Moderately branched polyethylene according to the ¹³CNMR spectrum with 0.87 Butyl branches , 13.92 vinyl groups and 13.83 end methyl groups per 1000 C; DSC: Tmax = 115 °C, ΔHm = -251 J/g). The filtrates were decanted and the upper layer was evaporated under vacuum resulting in 9.21 g of a white waxy material (Moderately branched according to the ¹³CNMR spectrum with 1.35 Butyl branches , 42.59 vinyl groups and 41.08 end methyl groups per 1000 C. (Total Activity = 1.04 E+07 g PE/(mol Cr· bar· h)).

### Example 16

### Polymerization of ethylene with Complex 5

The temperature was set at 60°C. MAO in toluene was then added (0.8 mL) to the vessel before 0.2 mL (0.0019 mmol) of a pre-formed solution of Complex 5 in MAO/toluene which had been left stirring at room temperature for > 2 h before it was added too. Ethylene was continuously supplied in order to keep a constant pressure. The consumption of ethylene was maintained for ca. 45 min. Afterwards, the polymerization mixture was added to a methanol/HCl solution. Filtration, washing and drying of the resulting solid (70°C/10 mm Hg for ca. 20 h) gave 14.66 g of a white powder (¹³CNMR: 0.22 Butyl groups, 12.98 vinyl groups and 14.22 end methyl groups per 1000 C; GPC: 1.620, Mw/Mn = 1.54). The filtrates were decanted and the upper layer was evaporated under vacuum resulting in 5.46 g of a white waxy material (¹³CNMR: 43.25 vinyl groups and 42.82 end methyl groups per 1000 C). (Total Activity = 3.5 E+06 g PE/(mol Cr· bar· h)).

### Example 17

### Polymerization of ethylene with Complex 6

The temperature was set at 70°C. MAO in toluene was then added (1.7 mL) to the vessel before 0.8 mL (0.0046 mmol) of a pre-formed solution of Complex 6 in MAO/toluene which had been left stirring at room temperature for 55 h before it was added too. Ethylene was continuously supplied in order to keep a constant pressure. The consumption of ethylene was maintained for 30 min. Afterwards, the polymerization mixture was added to a methanol/HCl solution. Filtration, washing and drying of the resulting solid (70°C/10 mm Hg for ca. 20 h) gave 18.44 g of a white powder (Linear polyethylene according to the ¹³CNMR spectrum with 6.58 vinyl groups and 10.50 end methyl groups per 1000 C). The filtrates were decanted and the upper layer was evaporated under vacuum resulting in 2.85 g of a white waxy material. (Total Activity = 2.52 E+06 g PE/(mol Cr· bar· h)).

### Example 18

### Polymerization of ethylene with Complex 6

The temperature was set at 70°C. TIBA in heptane (1.0 M) was then added (2.0 mL) to the vessel before 0.8 mL (0.0046 mmol) of a pre-formed solution of Complex 6 in MAO/toluene which had been left stirring at room temperature for 1 h before it was added too. Ethylene was continuously supplied in order to keep a constant pressure. The consumption of ethylene was maintained for 30 min. Afterwards, the polymerization mixture was added to a methanol/HCl solution. Filtration, washing and drying of the resulting solid (70°C/10 mm Hg for ca. 20 h) gave 25.43 g of a white powder (Linear polyethylene according to the ¹³CNMR spectrum with 6.78 vinyl groups, 1.16 Iso end groups and 10.50 end methyl groups per 1000 C; GPC: Mw = 2.690, Mw/Mn = 2.09). The filtrates were decanted and the upper layer was evaporated under vacuum resulting in 3.27 g of a white waxy material. (Total Activity = 3.14 E+06 g PE/(mol Cr· bar· h)).

### Example 19

### Polymerization of ethylene with Complex 6

The temperature was set at 80°C. TIBA in heptane (1.0 M) was then added (3.7 mL) to the vessel before 0.8 mL (0.0046 mmol) of a pre-formed solution of Complex 6 in MAO/toluene which had been left stirring at room temperature for 72 h before it was added too. Ethylene was continuously supplied in order to keep a constant pressure. The consumption of ethylene was maintained for 30 min. Afterwards, the polymerization mixture was added to a methanol/HCl solution. Filtration, washing and drying of the resulting solid (70°C/10 mm Hg for ca. 20 h) gave 23.10 g of a white powder (Linear polyethylene according to the ¹³CNMR spectrum with 6.88 vinyl groups, 2.48 Iso end groups and 11.03 end methyl groups per 1000 C). The filtrates were decanted and the upper layer was evaporated under vacuum resulting in 3.18 g of a white waxy material. (Total Activity = 2.88 E+06 g PE/(mol Cr· bar· h)).

### Example 20

### Polymerization of ethylene with Complex 6

The temperature was set at 90°C. TIBA in heptane (1.0 M) was then added (3.7 mL) to the vessel before 0.8 mL (0.0046 mmol) of a pre-formed solution of Complex 6 in MAO/toluene which had been left stirring at room temperature for 74 h before it was added too. Ethylene was continuously supplied in order to keep a constant pressure. The consumption of ethylene was maintained for 30 min. Afterwards, the polymerization mixture was added to a methanol/HCl solution. Filtration, washing and drying of the resulting solid (70°C/10 mm Hg for ca. 20 h) gave 13.71 g of a white powder (Linear polyethylene according to the ¹³CNMR spectrum with 6.49 vinyl groups, 3.60 Iso end groups and 11.17 end methyl groups per 1000 C). The filtrates were decanted and the upper layer was evaporated under vacuum resulting in 2.05 g of a white waxy material. (Total Activity = 1.73 E+06 g PE/(mol Cr· bar· h)).

### Example 21

### Polymerization of ethylene with Complex 6

The temperature was set at 70°C. Triethylaluminium in heptane (1.0 M) was then added (3.7 mL) to the vessel before 0.7 mL (0.0046 mmol) of a pre-formed solution of Complex 6 in MAO/toluene which had been left stirring at room temperature for 3 h before it was added too. Ethylene was continuously supplied in order to keep a constant pressure. The consumption of ethylene was maintained for 30 min. Afterwards, the polymerization mixture was added to a methanol/HCl solution. Filtration, washing and drying of the resulting solid (70°C/10 mm Hg for ca. 20 h) gave 37.25 g of a white powder (Linear polyethylene according to the ¹³CNMR spectrum with 7.44 vinyl groups and 12.20 end methyl groups per 1000 C). The filtrates were decanted and the upper layer was evaporated under vacuum resulting in 3.31 g of a white waxy material. (Total Activity = 4.38 E+06 g PE/(mol Cr· bar· h)).

### Example 22

### Polymerization of ethylene with Complex 6

The temperature was set at 70°C. TIBA in heptane (1.0 M) was then added (0.5 mL) to the vessel before 0.07 mL of 3% B(C₆F₅)₃ in Isopar, first, and, second, 0.8 mL (0.0046 mmol) of a pre-formed solution of Complex 6 in MAO/toluene which had been left stirring at room temperature for 7 h before it was added too. Ethylene was continuously supplied in order to keep a constant pressure. The consumption of ethylene was maintained for 15 min. Afterwards, the polymerization mixture was added to a methanol/HCl solution. Filtration, washing and drying of the resulting solid (70°C/10 mm Hg for ca. 20 h) gave 2.66 g of a white powder (Linear polyethylene according to the ¹³CNMR spectrum with 6.13 vinyl groups, 2.55 Iso end groups and 12.18 end methyl groups per 1000 C). The filtrates were decanted and the upper layer was evaporated under vacuum resulting in 0.65 g of a white waxy material. (Total Activity = 7.25 E+05 g PE/(mol Cr· bar· h)).

### Example 23

### Polymerization of ethylene with Complex 7

The temperature was set at 70°C. TIBA in heptane (1.0 M) was then added (1.9 mL) to the vessel before 0.4 mL (0.0023 mmol) of a pre-formed solution of Complex 7 in MAO/toluene which had been left stirring at room temperature for 6.5 h before it was added too. Ethylene was continuously supplied in order to keep a constant pressure. The consumption of ethylene was maintained for 30 min. Afterwards, the polymerization mixture was added to a methanol/HCl solution. Filtration, washing and drying of the resulting solid (70°C/10 mm Hg for ca. 20 h) gave 33.45 g of a white powder (Linear polyethylene according to the ¹³CNMR spectrum with 4.28 vinyl groups, 0.48 Iso end groups and 5.87 end methyl groups per 1000 C; GPC: Mw = 5.390, Mw/Mn = 2.17). The filtrates were decanted and the upper layer was evaporated under vacuum resulting in 1.53 g of a white waxy material. (Total Activity = 7.66 E+06 g PE/(mol Cr· bar· h)).

### Example 24

This example demonstrates the use of the chromium catalysts according to the present invention in combination with a second catalyst for the production of branched polyethylene in absence of a second co-monomer.

The temperature was set at 80°C. MAO in toluene (10%) was added (1.0 mL) to the vessel before 0.6 mL (0.0013 mmol) of a pre-formed solution of Complex 10 in MAO/toluene and 0.50 mL (0.0012 mmol) of a solution of isopropyl(fluorenyl)(cyclopentadienyl) zirconium dichloride (from Boulder) were added too. Ethylene was continuously supplied in order to keep a constant pressure. The consumption of ethylene was maintained for 30 min. Afterwards, the polymerization mixture was added to a methanol/HCl solution. Filtration, washing and drying of the resulting solid (70°C/10 mm Hg for ca. 20 h) gave 15.99 g of a white powder (Branched polyethylene according to the ¹³CNMR spectrum with 0.97 ethyl branches, 1.24 butyl branches and 12.01 hexyl or longer branches per 1000 C). From the filtrates 4.6 g of a white waxy material were recovered.

### Example 25

The following experiment was set forward in order to compare the difference in performance between a Cr(II) complex and a Cr(III) complex:
Two solutions were prepared, one with the Cr(III) Complex 4 and the other with the Cr(II) Complex 11. Both compounds have the same structure of ligand but differ in the oxidation state of the chromium. The pre-formed solutions were prepared employing the same batch of MAO/Toluene under nitrogen and were allowed to stand with stirring at 500 rpm at room the temperature for exactly one hour before being injected to the polymerization autoclave for the essay. The concentration of both solutions was the same, 0.003 mol/L, and the ratio Al_{MAO}/Cr for both was ca. 400. Both polymerization essays were performed at 70°C, employing 0.15 mL of the catalyst solutions and 0.37 mL of TIBA/Heptane (1.0 M). The pressure of ethylene employed was 4.0 bar and the consumption of ethylene was maintained for 30 min for both essays after which the polymerization mixtures were added to a methanol/HCl solution. Filtration, washing and drying of the resulting solids (70°C/10 mm Hg for ca. 20 h) gave 8.87 g of linear polyethylene for the complex of Cr[III] and 3.53 g of linear polyethylene for Cr[II]. The filtrates of both essays were decanted and the upper layers were evaporated under vacuum resulting in 2.53 g of a white waxy material. (Total Activity = 1.24 E+07 g PE/(mol Cr· bar· h)) for the essay with Complex 4 and 1.49 g of also a white waxy material. (Total Activity = 5.44 E+06 g PE/(mol Cr· bar· h)) for the essay performed with Comparative Complex 1. Thus, this experiment demonstrates that the Cr[III] complex is ca. twice as active as the Cr[II] complex under identical polymerization conditions, being this a clear advantage. Further, the Cr[III] complex is perfectly stable under air atmosphere whilst Cr[II] must be stored and manipulated under nitrogen atmosphere.

### Example 26

The following set of essays were performed in order to demonstrate the importance of pre-treatment of the chromium complex with alkylalumium and/or alkylaluminoxane to achieve a highly efficient catalytic system. All essays of the following table were performed under exactly the same polymerization conditions but employing a different method for the pre-treatment of the chromium [III] complex. According to the results shown in the table, the method chosen for pre-treatment has a high influence on the activity of the catalytic system.

### General Polymerization conditions for 26

The temperature was set according to the value indicated in the table. MAO in toluene was then added (1.0 mL) to the vessel before the corresponding volume of a pre-formed solution of Complex 4 prepared according to the description in the table was added too. In the pretreatment, all solutions had been left stirring at room temperature for > 30 min before being added to the polymerization reactor. The volume of the solution was such that 0.54 µmol of Complex 4 were employed in every essay. Ethylene was continuously supplied in order to keep a constant pressure. The consumption of ethylene was maintained for 60 min. Afterwards, the polymerization mixture was added to a methanol/HCl solution. The total polymer formed was recovered by filtration, washing and drying, first, of the resulting solid and by decanting, second, the resulting filtrates and evaporating the upper layer under vacuum. The total weight of polymer as given in the table results from the addition of the separate weights of every fraction thus formed.

| Essay | Pre-treatment | T (°C) | Total weight of polymer | Activity |
|---|---|---|---|---|
| 26.1 Comp | Solution of Complex 4 in dry tetrahydrofurane (ca. 0.0009 M) | 70 | 0 | 0 |
| 26.2 Comp | Solution of Complex 4 in dry dichloromethane (ca. 0.0018 M) | 70 | 4.60 | 2.13E+06 |
| 26.3 Comp | Solution of Complex 4 in dry toluene (ca. 0.0009 M) | 70 | 4.06 | 1.88E+06 |
| 26.4 | Solution of Complex 4 in 10% MAO/Toluene (ca. 0.0018 M) | 70 | 15.85 | 7.34E+06 |
| 26.5 | Solution of Complex 4 in 1 M TIBA/Toluene (0.0018 M) | 70 | 22.40 | 1.04E+07 |
| 26.6 Comp. | Solution of Complex 4 in dry dichloromethane (ca. 0.0018 M) | 80 | 6.23 | 2.89E+06 |
| 26.7 Comp | Solution of Complex 4 in dry Toluene (ca. 0.0009 M) | 80 | 5.62 | 2.60E+06 |
| 26.8 | Solution of Complex 4 in 10% MAO/Toluene (ca. 0.0018 M) | 80 | 31.35 | 1.45E+07 |
| 26.9 | Solution of Complex 4 in 10% MAO/Toluene (ca. 0.0018 M) | 80 | 20.92 | 9.69E+06 |

The set of experiments shown in the table above demonstrates that the highest activities are obtained when the chromium complexes are pre-treated with alkylaluminium or alkylaluminoxane prior to their addition into the polymerization reactor.

## Claims

1. A chromium (III) tridentate complex of formula (I) 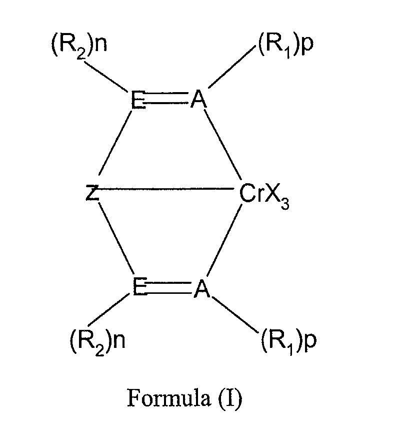 wherein:
Z is a group comprising at least a nitrogen, phosphorous, oxygen or sulfur atom which is able to coordinate to the chromium atom;
each R₁ is independently selected from the group consisting of H and a monovalent radical comprising from 1 to 30 carbon atoms and from 0 to 5 heteroatoms independently selected from the group consisting of Si, N, P, O, F, Cl, and B atoms;
each R₂ is independently selected from the group consisting of H and a monovalent radical comprising from 1 to 30 carbon atoms and from 0 to 5 heteroatoms independently selected from the group consisting of Si, N, P, O, F,
Cl, and B atoms;
each R₂ can independently join together with either Z or R₁ forming one or more aromatic or aliphatic rings optionally containing heteroatoms;
each A is independently selected from nitrogen, phosphorous, As, and Sb;
each E is independently selected from carbon, phosphorus, and nitrogen;
each p is independently 1 or 2;
each n is independently 0, 1 or 2; and
each X is independently an atom or group covalently or ionically attached to the chromium atom.

2. Chromium complex according to claim 1, wherein Z is selected from the group consisting of: 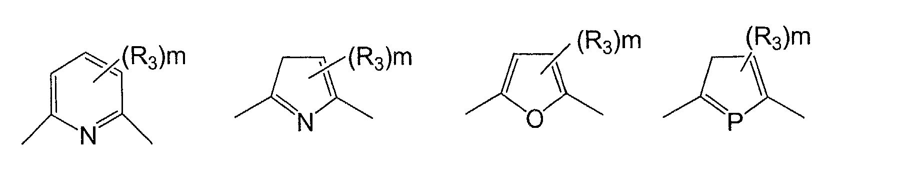 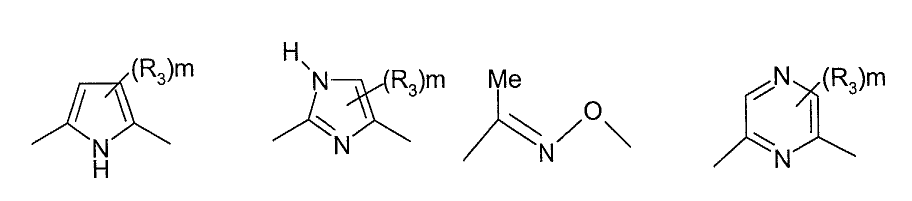 wherein each R₃ is independently selected from linear or branched C₁-C₂₀ alkyl, C₆-C₃₀ aryl, hydroxyl, amino, nitro, tri(linear or branched C₁-C₂₀ alkyl)silyl, C₁-C₂₀ alkoxy, chlorine, bromine, fluorine and trifluoromethyl;
m is 0, 1, 2 or 3;
A is nitrogen; and
E is carbon.

3. Chromium complex according to claims 1 or 2, wherein each R₁ is independently a phenyl radical optionally substituted in the positions 2 and/or 6.

4. Chromium complex according to claims 1 or 2, wherein each R₂ is independently selected from hydrogen, linear or branched C₁-C₂₀ alkyl, C₃-C₂₀ cycloalkyl, silyl and C₆-C₃₀ aryl.

5. An olefin polymerization catalyst obtainable by contacting a tridentate chromium complex with one or more organoaluminium compound(s).

6. Catalyst according to claim 5, wherein the organoaluminium compound is an aluminoxane and/or a trialkylaluminium compound.

7. Catalyst according to claim 5, wherein the chromium complex and the organoaluminium compound(s) are contacted previous to contact with the monomer.

8. Catalyst according to claim 7, wherein the pre-contact between chromium and the organoaluminium compound(s) lasts at least 20 minutes.

9. Catalyst according to claims 6-8, wherein the organoaluminium is methylaluminoxane

10. Catalyst according to claims 5 to 9, further comprising an inorganic or organic support.

11. Catalyst according to claims 5 to 10, further comprising a Ziegler-Natta catalyst.

12. Catalyst according to claims 5 to 10, further comprising a Phillips catalyst.

13. Catalyst according to claims 5 to 10, further comprising a metallocene catalyst.

14. Process for the (co)polymerization of alpha olefins **characterized by** the use of a catalyst according to anyone of claims 5 to 13.

15. Process according to claim 14, wherein one or more co-catalyst(s) are directly added to the polymerization reactor.

16. Process according to claim 15, wherein the added co-catalyst(s) are organoaluminium compounds and/or hydrocarbylboron compounds.

17. Process according to claim 16, wherein the organoaluminium compound is an aluminoxane and/or a trialkylaluminium compound.

18. Process according to claims 14-17, wherein the olefin used is ethylene optionally in combination with a C₃-C₈ alpha olefin.

19. Process according to claims 14 to 18, wherein a polyethylene wax is obtained.

20. Process according to claims 14 to 18 wherein a branched polyethylene is obtained.

21. Process according to claim 20, wherein ethylene is the only monomer employed.
